(19) Europäisches Patentamt
European Patent Office
Office européen des brevets

(11) EP 4 279 243 A1

(12) EUROPEAN PATENT APPLICATION
published in accordance with Art. 153(4) EPC

(43) Date of publication:
**22.11.2023 Bulletin 2023/47**

(21) Application number: **22739354.3**

(22) Date of filing: **07.01.2022**

(51) International Patent Classification (IPC):
***B29C 45/00*** (2006.01) ***B29C 45/64*** (2006.01)
***C08K 5/098*** (2006.01) ***C08L 67/03*** (2006.01)
***C08K 3/013*** (2018.01)

(52) Cooperative Patent Classification (CPC):
**B29C 45/00; B29C 45/64; C08K 3/013; C08K 5/098; C08L 67/03**

(86) International application number:
**PCT/JP2022/000371**

(87) International publication number:
**WO 2022/153945 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.01.2021 JP 2021004179**

(71) Applicant: **SUMITOMO CHEMICAL COMPANY, LIMITED**
**Tokyo 103-6020 (JP)**

(72) Inventors:
- **HEGI Hiromitsu**
  **Katsuragi-shi, Nara 639-2123 (JP)**
- **HARA Tomoyuki**
  **Tokyo 103-6020 (JP)**
- **SAITO Shintaro**
  **Tsukuba-shi, Ibaraki 300-3294 (JP)**

(74) Representative: **Vossius & Partner**
**Patentanwälte Rechtsanwälte mbB**
**Siebertstraße 3**
**81675 München (DE)**

# (54) LIQUID CRYSTAL POLYESTER COMPOSITION, METHOD FOR PRODUCING LIQUID CRYSTAL POLYESTER COMPOSITION, AND METHOD FOR PRODUCING INJECTION MOLDED ARTICLE

(57) A liquid crystal polyester composition comprising a liquid crystal polyester and a fatty acid metal salt, wherein the fatty acid metal salt comprises a fatty acid metal salt of which the number of carbon atoms is 20 or less, and a sieve residue of the fatty acid metal salt measured in accordance with JIS K 0069 for a sieve with a nominal opening of 106 μm prescribed in JIS Z 8801 is from 0 to 80% by mass relative to the total mass of the fatty acid metal salt.

EP 4 279 243 A1

## Description

Technical Field

The present invention relates to a liquid crystal polyester composition, a method for producing a liquid crystal polyester composition, and a method for producing an injection molded article.

Priority is claimed on Japanese Patent Application No. 2021-004179, filed January 14, 2021, the content of which is incorporated herein by reference.

Background Art

Liquid crystal polyesters are generally called thermotropic liquid crystal polymers, and because of their specific behavior, exhibit extremely superior melt fluidity, and depending on their structure, have thermal deformation resistance of 300°C or higher. To utilize high fluidity and superior heat resistance, liquid crystal polyesters are used for molded articles for electronic component applications, as well as applications such as vehicle components, OA components and heat-resistant tableware. In recent years, electronic equipment has continued to become smaller and thinner, and especially for electronic components such as connectors, a trend toward reduced size and thickness is marked, leading to growing of adoption of liquid crystal polyesters.

In recent years, in the production of injection molded articles using liquid crystal polyester resin pellets, continuous molding is sometimes conducted over long periods under conditions of injection molding in which molding cycle is shortened to improve productivity. In injection molding, the resin is plasticized and weighed by rotating a screw. In this type of liquid crystal polyester resin continuous molding, it is important that the plasticizing time (also called the weighing time) during the injection molding is short. If the plasticizing time lengthens, and variations occur in the plasticizing time during molding, then the dimensions and external appearance of the molded articles are sometimes affected.

For such issues, Patent Document 1 has described deburred pellets for stabilizing the plasticizing time during the molding of molded articles.

Citation List

Patent Document

Patent Document 1
JP2013-177007A

Summary of Invention

Problems to be solved by Invention

However, there is still room for improvement in terms of providing molding materials capable for injection molding with a shortened plasticizing time.

The present invention has been developed in light of these circumstances, and has an object of providing a liquid crystal polyester composition capable of shortening the plasticizing time in injection molding.

Further, the present invention also has an object of providing a method for producing the liquid crystal polyester composition.

Furthermore, the present invention also has an object of providing a method for producing an injection molded article using the liquid crystal polyester composition as a molding material.

Means to Solve the Problems

As a result of intensive investigation to solve the problems described above, the inventors of the present invention have found that by comprising a liquid crystal polyester, and a fatty acid metal salt from a specific sieve residue and having a specific number of carbon atoms, a liquid crystal polyester composition could be provided for which the plasticizing time in injection molding could be shortened, and completed the present invention.

In other words, the present invention has the following aspects.

<1> A liquid crystal polyester composition containing a liquid crystal polyester and a fatty acid metal salt, wherein

the fatty acid metal salt comprises a fatty acid metal salt of which the number of carbon atoms is 20 or less, and

a sieve residue of the fatty acid metal salt measured in accordance with JIS K 0069 for a sieve with a nominal opening of 106 μm prescribed in JIS Z 8801 is from 0 to 80% by mass relative to the total mass of the fatty acid metal salt.

<2> The liquid crystal polyester composition according to <1> above, wherein the fatty acid metal salt comprises a fatty acid metal salt of which the number of carbon atoms is 16 or less.
<3> The liquid crystal polyester composition according to <1> or <2> above, wherein the content of the fatty acid metal salt, relative to the total mass of the liquid crystal polyester composition, is from 0.001 to 5% by mass.
<4> The liquid crystal polyester composition according to any one of <1> to <3> above, wherein a sieve residue of the fatty acid metal salt measured in accordance with JIS K 0069 for a sieve with a nominal opening of 250 μm prescribed in JIS Z 8801 is from 0 to 30% by mass relative to the total mass of the fatty acid metal salt.
<5> The liquid crystal polyester composition according to any one of <1> to <4> above, wherein a sieve residue of the fatty acid metal salt measured in accordance with JIS K 0069 for a sieve with a nominal opening of 180 μm prescribed in JIS Z 8801 is from 0 to 50% by mass relative to the total mass of the fatty acid metal salt.
<6> The liquid crystal polyester composition according to any one of <1> to <5> above, wherein the fatty acid metal salt has a melting point from 130 to 300°C.
<7> The liquid crystal polyester composition according to any one of <1> to <6> above, wherein the metal of the fatty acid metal salt is calcium or lithium.
<8> The liquid crystal polyester composition according to <7> above, wherein the fatty acid metal salt is calcium laurate or lithium laurate.
<9> The liquid crystal polyester composition according to any one of <1> to <8> above, wherein the liquid crystal polyester has a structural unit (1) represented by following formula (1), a structural unit represented by following formula (2), and a structural unit represented by following formula (3).

(1) -O-Ar1-CO-

(2) -CO-Ar2-CO-

(3) -X-Ar3-Y-

[In formulas (1) to (3), Ar1 represents a phenylene group, a naphthylene group, or a biphenylylene group.
Ar2 and Ar3 each independently represent a phenylene group, a naphthylene group, a biphenylylene group, or a group represented by following formula (4). X and Y each independently represent an oxygen atom or an imino group (-NH-).
One or more of the hydrogen atoms in any of the groups represented by Ar1, Ar2 or Ar3 may each be independently substituted with a halogen atom, an alkyl group of 1 to 10 carbon atoms, or an aryl group of 6 to 20 carbon atoms.

(4) -Ar4-Z-Ar5-

[In formula (4), Ar4 and Ar5 each independently represent a phenylene group or a naphthylene group. Z represents an oxygen atom, a sulfur atom, a carbonyl group, a sulfonyl group, or an alkylidene group of 1 to 10 carbon atoms.
One or more of the hydrogen atoms in either of the groups represented by Ar4 or Ar5 may each be independently substituted with a halogen atom, an alkyl group of 1 to 10 carbon atoms, or an aryl group of 6 to 20 carbon atoms.

<10> The liquid crystal polyester composition according to any one of <1> to <9> above, further comprising an inorganic filler.
<11> The liquid crystal polyester composition according to <10> above, wherein the inorganic filler is at least one selected from the group consisting of a glass fiber, talc and mica.
<12> The liquid crystal polyester composition according to <10> or <11> above, wherein the content of the inorganic filler, relative to the total mass of the liquid crystal polyester composition, is from 0.3 to 65% by mass.
<13> The liquid crystal polyester composition according to any one of <1> to <12> above, wherein the fatty acid metal salt is a powder that satisfies the requirement that the sieve residue of the fatty acid metal salt measured in accordance with JIS K 0069 for a sieve with a nominal opening of 106 μm prescribed in JIS Z 8801 is from 0 to 80% by mass relative to the total mass of the fatty acid metal salt.
<14> The liquid crystal polyester composition according to any one of <1> to <13> above, wherein

the composition contains pellets comprising the liquid crystal polyester, and

at least a part of the fatty acid metal salt is attached to the surfaces of the pellets.

<15> The liquid crystal polyester composition according to any one of <1> to <14> above, wherein the composition is used as a molding material for an injection molding machine having a maximum clamping force of 400 kN or less.
<16> The liquid crystal polyester composition according to any one of <1> to <15> above, wherein the composition is used as a molding material for an injection molding machine having a screw diameter of 20 mm or less.
<17> A method for producing the liquid crystal polyester composition according to any one of <1> to <16> above,

the method comprising a mixing step of mixing a liquid crystal polyester and a fatty acid metal salt, wherein the fatty acid metal salt comprises a fatty acid metal salt of which the number of carbon atoms is 20 or less, and a sieve residue of the fatty acid metal salt measured in accordance with JIS K 0069 for a sieve with a nominal opening of 106 μm prescribed in JIS Z 8801 is from 0 to 80% by mass relative to the total mass of the fatty acid metal salt.

<18> The method for producing a liquid crystal polyester composition according to <17> above, wherein the mixing step comprises attaching the fatty acid metal salt to the surfaces of pellets containing the liquid crystal polyester.
<19> A method for producing an injection molded article, the method comprising a step of injection molding the liquid crystal polyester composition according to any one of <1> to <16> above to obtain the injection molded article.
<20> The method for producing an injection molded article according to <19> above, wherein the liquid crystal polyester composition is injection molded in an injection molding machine having a maximum clamping force of 400 kN or less.
<21> The method for producing an injection molded article according to <19> or <20> above, wherein the liquid crystal polyester composition is injection molded in an injection molding machine having a screw diameter of 20 mm or less.
<22> The method for producing an injection molded article according to any one of <19> to <21> above, wherein the liquid crystal polyester composition comprises a recycled material of a liquid crystal polyester.

Effects of Invention

The present invention can provide a liquid crystal polyester composition for which the plasticizing time in injection molding can be shortened.
The present invention can also provide a method for producing the liquid crystal polyester composition.
The present invention can also provide a method for producing an injection molded article using the liquid crystal polyester composition as a molding material.

Brief Description of Drawings

[FIG. 1] FIG. 1 is a schematic diagram showing one example of a pellet of an embodiment.
[FIG. 2] FIG. 2 is a schematic diagram showing a mold that is used in the examples for measuring thin-wall flow length.

Description of Embodiments

Embodiments of the liquid crystal polyester composition, the method for producing the liquid crystal polyester composition, and the method for producing an injection molded article according to the present invention are described below.

<<Liquid Crystal Polyester Composition>>

The liquid crystal polyester composition of one embodiment of the present invention comprises a liquid crystal polyester and a fatty acid metal salt, wherein the fatty acid metal salt comprises a fatty acid metal salt of which the number of carbon atoms is 20 or less, and a sieve residue of the fatty acid metal salt measured in accordance with JIS K 0069 for a sieve with a nominal opening of 106 μm prescribed in JIS Z 8801 is from 0 to 80% by mass relative to the total mass (100% by mass) of the fatty acid metal salt in the liquid crystal polyester composition.

<Fatty Acid Metal Salt>

The fatty acid metal salt contained in the liquid crystal polyester composition of an embodiment comprises a fatty acid metal salt of which the number of carbon atoms is 20 or less, preferably comprises a fatty acid metal salt of which the number of carbon atoms is 2 or more and 20 or less, more preferably comprises a fatty acid metal salt of which the number of carbon atoms is 10 or more and 18 or less, and even more preferably comprises a fatty acid metal salt of which the number of carbon atoms is 12 or more and 16 or less. The fatty acid may be a saturated fatty acid or an unsaturated fatty acid.

By including a fatty acid metal salt in which the number of carbon atoms of the fatty acid is within the above range, the plasticizing time during injection molding can be shortened.

In this description, the "plasticizing time" refers to the time, in injection molding, from the point where the previous injection completed, and screw rotation (for plasticization and weighing of the molding material) started, until the point where the molding material containing the melted resin to be injected in the next injection molding fills the cylinder tip with the required injection volume. The plasticizing time is sometimes also called the "weighing time". The plasticizing time can be measured using a measurement instrument attached to the injection molding machine.

Examples of the action of the fatty acid metal salt comprise action as a lubricant, and it is thought that, because the liquid crystal polyester composition is easily fed by the screw of the injection molding machine through to the tip portion of the cylinder by the action as a lubricant, the plasticizing time during injection molding can be shortened.

The fatty acid metal salt contained in the liquid crystal polyester composition of an embodiment comprises a fatty acid metal salt corresponding with the fatty acid of which the number of carbon atoms is 20 or less described above in a content which, relative to the total mass (100% by ass) of the fatty acid metal salt in the liquid crystal polyester composition, may be from 50 to 100% by mass, from 80 to 100% by mass, or from 95 to 100% by mass.

Specific examples of the fatty acid of which the number of carbon atoms is 20 or less include capric acid, undecylic acid, lauric acid, tridecylic acid, myristic acid, pentadecylic acid, palmitic acid, margaric acid, stearic acid, nonadecylic acid, and arachidic acid.

Further, from the viewpoint of the moldability of the liquid crystal polyester composition, particularly shortening of the plasticizing time, the fatty acid metal salt preferably has a melting point that is from 130 to 300°C, more preferably from 140 to 280°C, even more preferably from 150 to 270°C, and particularly preferably from 200 to 260°C.

For example, in cases such as when the liquid crystal polyester composition is in the form of pellets, the pellets are sometimes dried at temperatures of 100°C or higher. Because the melting point of the fatty acid metal salt is within the above range, melting, decomposition or volatilization of the fatty acid metal salt during heat treatments such as drying become less likely, and the moldability, and particularly the plasticizing time shortening effect, can be improved.

In this description, the "melting point" of the fatty acid metal salt is defined as the temperature at an apex of an endothermic peak of the highest temperature side observed when differential scanning calorimetry measurements are conducted using a differential scanning calorimeter (for example, s DSC-50 manufactured by Shimadzu Corporation) by raising the temperature from room temperature at an increasing rate of temperature of 20°C/minute.

The fatty acid metal salt contained in the liquid crystal polyester composition of an embodiment is preferably a metal salt of lauric acid or stearic acid. Specific examples of preferred fatty acid metal salts include calcium laurate, calcium stearate, lithium laurate, lithium stearate, barium laurate, barium stearate, aluminum laurate, aluminum stearate, potassium laurate, potassium stearate, sodium laurate, and sodium stearate.

Among the above, the fatty acid metal salt contained in the liquid crystal polyester composition of an embodiment is more preferably at least one kind of fatty acid metal salt selected from the group consisting of calcium laurate, calcium stearate, lithium laurate, lithium stearate, barium laurate and barium stearate.

In the fatty acid metal salt, the metal is preferably calcium or lithium.

Specific preferred examples of these fatty acid metal salts include at least one kind of fatty acid metal salt selected from the group consisting of calcium laurate, lithium laurate and lithium stearate.

The metal of the fatty acid metal salt is more preferably lithium, because of having more stable properties under high-temperature conditions, including a higher melting point and a smaller mass loss ratio.

Specific preferred examples of these fatty acid metal salts include at least one kind of fatty acid metal salt selected from the group consisting of lithium laurate and lithium stearate.

The mass loss ratio of the fatty acid metal salt may be 1 or less, or may be from 0.1 to 1, or from 0.2 to 0.6.

The mass loss ratio of the fatty acid metal salt is calculated, for the fatty acid metal salt which was heat treated in which the salt is held under normal atmospheric conditions at 160°C for 48 hours and then cooled to room temperature, by measuring the mass (g) of the fatty acid metal salt before the heat treatment and the fatty acid metal salt after the heat treatment, and using the following formula.

Fatty acid metal salt Mass loss ratio of fatty acid metal salt (%) = (mass (g) of fatty acid metal salt before heat treatment - mass (g) of fatty acid metal salt after heat treatment) ÷ mass (g) of fatty acid metal salt before heat treatment × 100

Further, a sieve residue of the fatty acid metal salt contained in the liquid crystal polyester composition of an embodiment, measured in accordance with JIS K 0069 for a sieve with a nominal opening of 106 μm prescribed in JIS Z 8801, relative to the total mass (100% by mass) of the fatty acid metal salt in the liquid crystal polyester composition of the embodiment, is from 0 to 80% by mass, and is preferably from 0 to 60% by mass, more preferably from 0 to 40% by mass, even more preferably from 0 to 30% by mass, and particularly preferably from 0 to 25% by mass.

A liquid crystal polyester composition containing a fatty acid metal salt for which the sieve residue for a sieve with a nominal opening of 106 μm is no more than the above upper limit provides an excellent effect in terms of shortening the plasticizing time during injection molding. Further, such a liquid crystal polyester composition also suppresses variations in the peak pressure during injection molding (the maximum injection pressure), thus providing a superior injection pressure stabilizing effect.

It is thought that the reason for this is that by containing fewer large diameter particles (the sieve residue) based on the nominal opening of 106 μm, that is, by containing more small diameter particles (the sieved fraction), the distribution of the fatty acid metal salt can be easily uniformized and the actions of the fatty acid metal salt are more favorably performed.

In this description, the adoption of sieve residues to prescribe the particle size of the fatty acid metal salt is an important point. In typical particle size measurements, such as cases where using a material in which the particles are dispersed in a liquid as a sample, the particle size is prescribed using a value that corresponds with the primary particle size. However, as shown in the examples below, it is clear that the correlation between the average particle size (corresponding with the primary particle size) determined by microscope inspection and the plasticizing time is poor.

In contrast, by using the sieve residue value (which corresponds with the secondary particle size and the like), a correlation can be confirmed with the plasticizing time, and it is evident that prescribing the particle size of the fatty acid metal salt by using the sieve residue is an important factor in determining the plasticizing time.

It is thought that the reason for this observation is that a particle size prescribed by sieving more accurately reflects the state of the fatty acid metal salt during actual injection molding plasticization (weighing).

Further, from a similar viewpoint, a sieve residue of the fatty acid metal salt contained in the liquid crystal polyester composition of an embodiment, measured in accordance with JIS K 0069 for a sieve with a nominal opening of 250 μm prescribed in JIS Z 8801, relative to the total mass (100% by mass) of the fatty acid metal salt in the liquid crystal polyester composition of the embodiment, is preferably from 0 to 30% by mass, more preferably from 0 to 7% by mass, even more preferably from 0 to 5% by mass, and particularly preferably from 0 to 3% by mass.

Further, from a similar viewpoint, a sieve residue of the fatty acid metal salt contained in the liquid crystal polyester composition of an embodiment, measured in accordance with JIS K 0069 for a sieve with a nominal opening of 180 μm prescribed in JIS Z 8801, relative to the total mass (100% by mass) of the fatty acid metal salt in the liquid crystal polyester composition of the embodiment, is preferably from 0 to 50% by mass, more preferably from 0 to 30% by mass, and even more preferably from 0 to 20% by mass.

Furthermore, from a similar viewpoint, a sieve residue of the fatty acid metal salt contained in the liquid crystal polyester composition of an embodiment, measured in accordance with JIS K 0069 for a sieve with a nominal opening of 75 μm prescribed in JIS Z 8801, relative to the total mass (100% by mass) of the fatty acid metal salt in the liquid crystal polyester composition of the embodiment, may be from 0 to 100% by mass, from 10 to 90% by mass, from 20 to 80% by mass, or from 30 to 70% by mass.

An example of the fatty acid metal salt contained in the liquid crystal polyester composition of an embodiment is a powder of the fatty acid metal salt that satisfies the above sieve residue requirement.

The content of the fatty acid metal salt in the liquid crystal polyester composition of an embodiment may be determined appropriately within the range that yields a plasticizing time shortening effect during injection molding. In one example, the content of the fatty acid metal salt in the liquid crystal polyester composition, relative to the total mass (100% by mass) of the liquid crystal polyester composition of the embodiment, is preferably from 0.001 to 5% by mass, more preferably from 0.002 to 3% by mass, and even more preferably from 0.003 to 0.5% by mass.

<Liquid Crystal Polyester>

One embodiment of the liquid crystal polyester used in the embodiments is described below.

The liquid crystal polyester according to an embodiment is a polyester that exhibits liquid crystallinity in a melted state, and is preferably a polyester that melts at a temperature of 450°C or lower. The liquid crystal polyester may be a liquid crystal polyester amide, a liquid crystal polyester ether, a liquid crystal polyester carbonate, or a liquid crystal polyester imide. The liquid crystal polyester is preferably a fully aromatic liquid crystal polyester having only structural units derived from aromatic compounds as the raw material monomers.

Typical examples of the liquid crystal polyester include polymers obtained by condensation-polymerization (polycondensation) of an aromatic hydroxycarboxylic acid, an aromatic dicarboxylic acid, and at least one kind of compound selected from the group consisting of aromatic diols, aromatic hydroxylamines and aromatic diamines; polymers

obtained by polymerizing a plurality of aromatic hydroxycarboxylic acids; polymers obtained by polymerizing an aromatic dicarboxylic acid, and at least one kind of compound selected from the group consisting of aromatic diols, aromatic hydroxylamines and aromatic diamines; and polymers obtained by polymerizing a polyester such as polyethylene terephthalate and an aromatic hydroxycarboxylic acid.

Among these, the liquid crystal polyester is preferably a polymer obtained by condensation-polymerization (polycondensation) of an aromatic hydroxycarboxylic acid, an aromatic dicarboxylic acid, and at least one kind of compound selected from the group consisting of aromatic diols, aromatic hydroxylamines and aromatic diamines.

Here, the aromatic hydroxycarboxylic acid, aromatic dicarboxylic acid, aromatic diol, aromatic hydroxylamine and aromatic diamine may each independently be either partially or completely replaced with a polymerizable ester-forming derivative thereof.

Examples of polymerizable derivatives of compounds having a carboxyl group such as aromatic hydroxycarboxylic acids and aromatic dicarboxylic acids include esters, acid halides, and acid anhydrides. Examples of the esters include compounds in which a carboxyl group has been converted to an alkoxycarbonyl group or an aryloxycarbonyl group. Examples of the acid halides include compounds in which a carboxyl group has been converted to a haloformyl group. Examples of the acid anhydrides include compounds in which a carboxyl group has been converted to an acyloxycarbonyl group.

Examples of polymerizable derivatives of compounds having a hydroxyl group such as aromatic hydroxycarboxylic acids, aromatic diols and aromatic hydroxylamines include compounds (acylated products) in which a hydroxyl group has been acylated and converted to an acyloxy group.

Examples of polymerizable derivatives of compounds having an amino group such as aromatic hydroxylamines and aromatic diamines include compounds (acylated products) in which an amino group has been acylated and converted to an acylamino group.

Among the above examples of polymerizable derivatives, acylated products obtained by acylation of aromatic hydroxycarboxylic acids and aromatic diols are preferred as raw material monomers for the liquid crystal polyester.

The liquid crystal polyester according to an embodiment preferably has a structural unit represented by following formula (1) (hereinafter also referred to as the "structural unit (1)").

(1) -O-Ar1-CO-

(Ar1 represents a divalent aromatic hydrocarbon group, and
one or more of the hydrogen atoms in the group represented by Ar1 may each be independently substituted with a halogen atom, an alkyl group of 1 to 10 carbon atoms, or an aryl group of 6 to 20 carbon atoms.)

In the liquid crystal polyester according to an embodiment, in the structural unit represented by following formula (1), Ar1 is preferably a phenylene group, a naphthylene group or a biphenylylene group. The liquid crystal polyester according to one embodiment more preferably has the structural unit (1), a structural unit represented by following formula (2) (hereinafter also referred to as the "structural unit (2)"), and a structural unit represented by following formula (3) (hereinafter also referred to as the "structural unit (3)").

(1) -O-Ar1-CO-

(2) -CO-Ar2-CO-

(3) -X-Ar3-Y-

[In formulas (1) to (3), Ar1 represents a phenylene group, a naphthylene group, or a biphenylylene group.

Ar2 and Ar3 each independently represent a phenylene group, a naphthylene group, a biphenylylene group, or a group represented by following formula (4). X and Y each independently represent an oxygen atom or an imino group (-NH-).

One or more of the hydrogen atoms in any of the groups represented by Ar1, Ar2 or Ar3 may each be independently substituted with a halogen atom, an alkyl group of 1 to 10 carbon atoms, or an aryl group of 6 to 20 carbon atoms.

(4) -Ar4-Z-Ar5-

[In formula (4), Ar4 and Ar5 each independently represent a phenylene group or a naphthylene group. Z represents an oxygen atom, a sulfur atom, a carbonyl group, a sulfonyl group, or an alkylidene group of 1 to 10 carbon atoms.

One or more of the hydrogen atoms in either of the groups represented by Ar4 or Ar5 may each be independently substituted with a halogen atom, an alkyl group of 1 to 10 carbon atoms, or an aryl group of 6 to 20 carbon atoms.

In the structural unit (3), X and Y are preferably oxygen atoms.

Examples of the halogen atoms that may substitute a hydrogen atom include a fluorine atom, chlorine atom, bromine atom, and iodine atom.

Examples of the alkyl groups of 1 to 10 carbon atoms that may substitute a hydrogen atom include a methyl group, ethyl group, 1-propyl group, isopropyl group, 1-butyl group, isobutyl group, sec-butyl group, tert-butyl group, 1-hexyl group, 2-ethylhexyl group, 1-octyl group, and 1-decyl group.

Examples of the aryl groups of 6 to 20 carbon atoms that may substitute a hydrogen atom include monocyclic aromatic groups such as a phenyl group, ortho-tolyl group, meta-tolyl group and para-tolyl group, and condensed-ring aromatic groups such as a 1-naphthyl group and a 2-naphthyl group.

When one or more of the hydrogen atoms in any of the groups represented by Ar1, Ar2, Ar3, Ar4 or Ar5 are each substituted with an aforementioned halogen atom, alkyl group of 1 to 10 carbon atoms, or aryl group of 6 to 20 carbon atoms, the number of these groups substituting a hydrogen atom in each of the groups represented by Ar1, Ar2, Ar3, Ar4 or Ar5 is, independently, preferably either one or two, and is more preferably one.

Examples of the aforementioned alkylidene group of 1 to 10 carbon atoms include a methylene group, ethylidene group, isopropylidene group, 1-butylidene group, and 2-ethylhexylidene group.

Examples of the liquid crystal polyester comprise polyesters containing a structural unit represented by following formula (1), a structural unit represented by following formula (2), and a structural unit represented by following formula (3).

(1) -O-Ar1-CO-

(2) -CO-Ar2-CO-

(3) -O-Ar3-O-

(Ar1 represents a 2,6-naphthylene group, 1,4-phenylene group or 4,4'-biphenylylene group,

Ar2 and Ar3 each independently represent a 2,6-naphthylene group, 2,7-naphthylene group, 1,4-phenylene group, 1,3-phenylene group or 4,4'-biphenylene group,
and hydrogen atoms in the groups represented by Ar1, Ar2 or Ar3 may each be independently substituted with a halogen atom, an alkyl group of 1 to 10 carbon atoms, or an aryl group of 6 to 20 carbon atoms.)

The liquid crystal polyester according to an embodiment preferably contains a structural unit containing a naphthalene structure. Liquid crystal polyesters containing a structural unit that includes a naphthalene structure tend to exhibit excellent dielectric characteristics.

In the liquid crystal polyester, the content of structural units containing a naphthalene structure, relative to the total (100 mol%) of all the structural units in the liquid crystal polyester (namely, the value obtained by determining the molar equivalent value (mol) for each structural unit that constitutes the liquid crystal polyester by dividing the mass of the structural unit by the formula weight of the structural unit, and then totaling these values for all of the structural units), is preferably 40 mol% or more, more preferably 50 mol% or more, even more preferably 55 mol% or more, and still more preferably 60 mol% or higher. By ensuring that the content of structural units containing a naphthalene structure is as large as the above lower limit or more, the dielectric constant of the liquid crystal polyester can be further reduced.

The content of structural units containing a naphthalene structure in the liquid crystal polyester, relative to the total (100 mol%) of all the structural units in the liquid crystal polyester, is preferably 90 mol% or less, more preferably 85 mol% or less, and even more preferably 80 mol% or less. By ensuring that the content of structural units containing a naphthalene structure is the above upper limit or less, the reaction stability during production of the liquid crystal polyester can be better maintained.

An example of the numerical range for the content of structural units containing a naphthalene structure may be 40 mol% or more and 90 mol% or less, 50 mol% or more and 85 mol% or less, 55 mol% or more and 85 mol% or less, or 60 mol% or more and 80 mol% or less.

In another aspect, the content of structural units containing a naphthalene structure in the liquid crystal polyester, expressed on the basis of the number of structural units relative to the total number (100%) of all the structural units within the liquid crystal polyester, is preferably 40% or more, more preferably 50% or more, even more preferably 55% or more, and still more preferably 60% or higher. By ensuring that the content of structural units containing a naphthalene structure is as large as the above lower limit or more, the dielectric constant of the liquid crystal polyester can be further reduced.

The content of structural units containing a naphthalene structure in the liquid crystal polyester, expressed on the basis of the number of structural units relative to the total number (100%) of all the structural units within the liquid crystal polyester, is preferably 90% or less, more preferably 85% or less, and even more preferably 80% or less. By

ensuring that the content of structural units containing a naphthalene structure is the above upper limit or less, the reaction stability during production of the liquid crystal polyester can be better maintained.

An example of the numerical range for the content of structural units containing a naphthalene structure, expressed on the basis of the number of structural units, may be 40% or more and 90% or less, 50% or more and 85% or less, 55% or more and 85% or less, or 60% or more and 80% or less.

In a liquid crystal polyester having the structural unit (1) described above, the structural unit (2) described below and the structural unit (3) described below, as an example of a liquid crystal polyester having structural units containing a divalent naphthalene structure, at least one of the plurality of Ar1, Ar2, Ar3, Ar4 and Ar5 is preferably a naphthylene group.

In the liquid crystal polyester according to an embodiment, Ar1 is preferably a 2,6-naphthylene group.

The liquid crystal polyester in which Ar1 is a 2,6-naphthylene group preferably has the structural unit (1) described above, the structural unit (2) described below, and the structural unit (3) described below.

In the liquid crystal polyester according to one embodiment, the content of the structural unit represented by formula (1) in which Ar1 is a 2,6-naphthylene group, relative to the total of all the structural units within the liquid crystal polyester, may be 40 mol% or more, and may be 40 mol% or more and 90 mol% or less, 50 mol% or more and 85 mol% or less, 55 mol% or more and 85 mol% or less, or 60 mol% or more and 80 mol% or less.

In another aspect, in the liquid crystal polyester according to an embodiment, the content of the structural unit represented by formula (1) in which Ar1 is a 2,6-naphthylene group, expressed on the basis of the number of structural units relative to the total number (100%) of all the structural units within the liquid crystal polyester, may be 40% or more, 40% or more and 90% or less, 50% or more and 85% or less, 55% or more and 85% or less, or 60% or more and 80% or less.

The structural unit (1) is a structural unit derived from an aromatic hydroxycarboxylic acid.

Examples of the aromatic hydroxycarboxylic acid include para-hydroxybenzoic acid, meta-hydroxybenzoic acid, 2-hydroxy-6-naphthoic acid, 2-hydroxy-3-naphthoic acid, 1-hydroxy-5-naphthoic acid, 4-hydroxy-4'-carboxydiphenyl ether, and aromatic hydroxycarboxylic acids in which at least a part of the hydrogen atoms on an aromatic ring in one of the above aromatic hydroxycarboxylic acids have each been substituted with a substituent selected from the group consisting of alkyl groups, aryl groups and halogen atoms. In the production of the liquid crystal polyester, one of these aromatic hydroxycarboxylic acids may be used alone, or a combination of two or more aromatic hydroxycarboxylic acids may be used.

Structural units in which Ar1 is a 1,4-phenylene group (for example, a structural unit derived from 4-hydroxybenzoic acid) or in which Ar1 is a 2,6-naphthylene group (for example, a structural unit derived from 6-hydroxy-2-naphthoic acid) are preferred as the structural unit (1).

The structural unit (2) is a structural unit derived from an aromatic dicarboxylic acid.

Examples of the aromatic dicarboxylic acid include terephthalic acid, isophthalic acid, biphenyl-4,4'-dicarboxylic acid, 2,6-naphthalenedicarboxylic acid, diphenyl ether-4,4'-dicarboxylic acid, diphenyl thioether-4,4'-dicarboxylic acid, and aromatic dicarboxylic acids in which at least a part of the hydrogen atoms on an aromatic ring in one of the above aromatic dicarboxylic acids have each been substituted with a substituent selected from the group consisting of alkyl groups, aryl groups and halogen atoms.

In the production of the liquid crystal polyester, one of these aromatic dicarboxylic acids may be used alone, or a combination of two or more aromatic dicarboxylic acids may be used.

Structural units in which Ar2 is a 1,4-phenylene group (such as a structural unit derived from terephthalic acid), in which Ar2 is a 1,3-phenylene group (such as a structural unit derived from isophthalic acid), in which Ar2 is a 2,6-naphthylene group (such as a structural unit derived from 2,6-naphthalenedicarboxylic acid), or in which Ar2 is a diphenyl ether-4,4'-diyl group (such as a structural unit derived from diphenyl ether-4,4'-dicarboxylic acid) are preferred as the structural unit (2).

The structural unit (3) is a structural unit derived from an aromatic diol, an aromatic hydroxylamine or an aromatic diamine.

Examples of the aromatic diol, aromatic hydroxylamine or aromatic diamine include 4,4'-dihydroxybiphenyl, hydroquinone, methylhydroquinone, resorcin, 4,4'-dihydroxydiphenyl ketone, 4,4'-dihydroxydiphenyl ether, bis(4-hydroxyphenyl)methane, 1,2-bis(4-hydroxyphenyl)ethane, 4,4'-dihydroxydiphenylsulfone, 4,4'-dihydroxydiphenyl thioether, 2,6-dihydroxynaphthalene, 1,5-dihydroxynaphthalene, 4-aminophenol, 1,4-phenylenediamine, 4-amino-4'-hydroxybiphenyl, and 4,4'-diaminobiphenyl.

In the production of the liquid crystal polyester, one of these aromatic diols, aromatic hydroxylamines or aromatic diamines may be used alone, or a combination of two or more such compounds may be used.

Structural units in which Ar3 is a 1 ,4-phenylene group (such as a structural unit derived from hydroquinone, 4-aminophenol or 1,4-phenylenediamine), or in which Ar3 is a 4,4'-biphenylylene group (such as a structural unit derived from 4,4'-dihydroxybiphenyl, 4-amino-4'-hydroxybiphenyl, or 4,4'-diaminobiphenyl) are preferred as the structural unit (3).

In this description, "derived from" means that the chemical structure change for polymerization of a raw material monomer and no other structural changes occur.

When particularly favorable heat resistance is required in a liquid crystal polyester film obtained from the liquid

crystal polyester compound of an embodiment, the number of substituents is preferably kept small, and in particular, the liquid crystal polyester preferably has no substituents such as alkyl groups.

Next, liquid crystal polyesters that can be applied particularly favorably to the liquid crystal polyester composition of an embodiment are described below.

Specific examples of preferred liquid crystal polyesters include copolymers composed of structural units derived from the combinations of monomers described below.

1) 4-hydroxybenzoic acid / 2-hydroxy-6-naphthoic acid copolymers
2) 4-hydroxybenzoic acid / terephthalic acid / 4,4'-dihydroxybiphenyl copolymers
3) 4-hydroxybenzoic acid / terephthalic acid / isophthalic acid / 4,4'-dihydroxybiphenyl copolymers
4) 4-hydroxybenzoic acid / terephthalic acid / isophthalic acid / 4,4'-dihydroxybiphenyl / hydroquinone copolymers
5) 4-hydroxybenzoic acid / terephthalic acid / hydroquinone copolymers
6) 2-hydroxy-6-naphthoic acid / terephthalic acid / hydroquinone copolymers
7) 2-hydroxy-6-naphthoic acid / terephthalic acid / 2,6-naphthalenedicarboxylic acid / hydroquinone copolymers
8) 4-hydroxybenzoic acid / 2-hydroxy-6-naphthoic acid / terephthalic acid copolymers
9) 4-hydroxybenzoic acid / 2-hydroxy-6-naphthoic acid / isophthalic acid copolymers
10) 4-hydroxybenzoic acid / 2-hydroxy-6-naphthoic acid / terephthalic acid / 4,4'-dihydroxybiphenyl copolymers
11) 4-hydroxybenzoic acid / 2-hydroxy-6-naphthoic acid / terephthalic acid / 2,6-naphthalenedicarboxylic acid / 4,4'-dihydroxybiphenyl copolymers
12) 4-hydroxybenzoic acid / 2-hydroxy-6-naphthoic acid / terephthalic acid / 4,4'-dihydroxybiphenyl / methylhydroquinone copolymers
13) 2-hydroxy-6-naphthoic acid / terephthalic acid / 4,4'-dihydroxybiphenyl copolymers
14) 2-hydroxy-6-naphthoic acid / terephthalic acid / isophthalic acid / 4,4'-dihydroxybiphenyl copolymers
15) 2-hydroxy-6-naphthoic acid / terephthalic acid / 2,6-naphthalenedicarboxylic acid / 4,4'-dihydroxybiphenyl copolymers
16) 2-hydroxy-6-naphthoic acid / terephthalic acid / isophthalic acid / 2,6-naphthalenedicarboxylic acid / 4,4'-dihydroxybiphenyl copolymers
17) 4-hydroxybenzoic acid / 2-hydroxy-6-naphthoic acid / terephthalic acid / hydroquinone copolymers
18) 4-hydroxybenzoic acid / 2-hydroxy-6-naphthoic acid / terephthalic acid / 3,3'-dimethyl-1,1'-biphenyl-4,4'-diol copolymers
19) 4-hydroxybenzoic acid / 2-hydroxy-6-naphthoic acid / terephthalic acid / hydroquinone / 4,4'-dihydroxybiphenyl copolymers
20) 4-hydroxybenzoic acid / 2,6-naphthalenedicarboxylic acid / 4,4'-dihydroxybiphenyl copolymers
21) 4-hydroxybenzoic acid / terephthalic acid / 2,6-naphthalenedicarboxylic acid / hydroquinone copolymers
22) 4-hydroxybenzoic acid / 2,6-naphthalenedicarboxylic acid / hydroquinone copolymers
23) 4-hydroxybenzoic acid / 2-hydroxy-6-naphthoic acid / 2,6-naphthalenedicarboxylic acid / hydroquinone copolymers
24) 4-hydroxybenzoic acid / terephthalic acid / 2,6-naphthalenedicarboxylic acid / hydroquinone / 4,4'-dihydroxybiphenyl copolymers
25) 4-hydroxybenzoic acid / terephthalic acid / 4-aminophenol copolymers
26) 2-hydroxy-6-naphthoic acid / terephthalic acid / 4-aminophenol copolymers
27) 4-hydroxybenzoic acid / 2-hydroxy-6-naphthoic acid / terephthalic acid / 4-aminophenol copolymers
28) 4-hydroxybenzoic acid / terephthalic acid / 4,4'-dihydroxybiphenyl / 4-aminophenol copolymers
29) 4-hydroxybenzoic acid / terephthalic acid / ethylene glycol copolymers
30) 4-hydroxybenzoic acid / terephthalic acid / 4,4'-dihydroxybiphenyl / ethylene glycol copolymers
31) 4-hydroxybenzoic acid / 2-hydroxy-6-naphthoic acid / terephthalic acid / ethylene glycol copolymers
32) 4-hydroxybenzoic acid / 2-hydroxy-6-naphthoic acid / terephthalic acid / 4,4'-dihydroxybiphenyl / ethylene glycol copolymers
33) 4-hydroxybenzoic acid / terephthalic acid / 2,6-naphthalenedicarboxylic acid / 4,4'-dihydroxybiphenyl copolymers.

The content of the structural unit (1) in the liquid crystal polyester, relative to the total of all the structural units that constitute the liquid crystal polyester (namely, the value obtained by determining the molar equivalent value (mol) for each structural unit that constitutes the liquid crystal polyester by dividing the mass of the structural unit by the formula weight of the structural unit, and then totaling these values for all of the structural units), is preferably 30 mol% or more, and is more preferably from 30 to 90 mol%, even more preferably from 30 to 85 mol%, still more preferably from 40 to 75 mol%, still more preferably from 50 to 70 mol%, and particularly preferably from 55 to 70 mol%.

Provided the content of the structural unit (1) in the liquid crystal polyester is 30 mol% or more, the heat

resistance and hardness of molded articles obtained using the liquid crystal polyester of an embodiment can be more easily improved. Further, provided the content of the structural unit (1) is 80 mol% or less, the melt viscosity can be lowered. As a result, the temperature required for molding of the liquid crystal polyester can be more easily lowered.

The content of the structural unit (2) in the liquid crystal polyester, relative to the total of all the structural units that constitute the liquid crystal polyester, is preferably 35 mol% or less, and is more preferably from 10 to 35 mol%, even more preferably from 15 to 35 mol%, and still more preferably from 17.5 to 32.5 mol%.

The content of the structural unit (3) in the liquid crystal polyester, relative to the total of all the structural units that constitute the liquid crystal polyester, is preferably 35 mol% or less, and is more preferably from 10 to 35 mol%, even more preferably from 15 to 35 mol%, and still more preferably from 17.5 to 32.5 mol%.

In the liquid crystal polyester, the ratio between the content of the structural unit (2) and the content of the structural unit (3) is represented by [content of structural unit (2)] / [content of structural unit (3)] (mol/mol), and is preferably 0.9 or more and 1.1 or less, more preferably 0.95 or more and 1.05 or less, and even more preferably 0.98 or more and 1.02 or less.

In the liquid crystal polyester, the ratio between the content of the structural unit (3) and the content of the structural unit (1) is represented by [content of structural unit (3)] / [content of structural unit (1)] (mol/mol), and is preferably 0.2 or more and 1.0 or less, more preferably 0.25 or more and 0.85 or less, and even more preferably 0.3 or more and 0.75 or less.

The liquid crystal polyester may have only one type of each of the structural units (1) to (3), or may have two or more types of each structural unit. Further, the liquid crystal polyester may have either one type, or two or more types of structural units other than the structural units (1) to (3), but the content of such other structural units relative to the total of all the structural units of the liquid crystal polyester is preferably 10 mol% or less, and more preferably 5 mol% or less.

The sum of the structural unit (1) of the liquid crystal polyester resin, the structural unit (2) of the liquid crystal polyester and the structural unit (3) of the liquid crystal polyester must not exceed 100 mol%.

In another aspect, the content of the structural unit (1) in the liquid crystal polyester, expressed on the basis of the number of structural units relative to the total number (100%) of all the structural units that constitute the liquid crystal polyester, is preferably 30% or more, and is more preferably from 30 to 90%, even more preferably from 30 to 85%, still more preferably from 40 to 75%, still more preferably from 50 to 70%, and particularly preferably from 55 to 70%.

Provided the number-based content of the structural unit (1) in the liquid crystal polyester is mol% or more, the heat resistance and hardness of molded articles obtained using the liquid crystal polyester of an embodiment can be more easily improved. Further, provided the number-based content of the structural unit (1) is 80% or less, the melt viscosity can be lowered. As a result, the temperature required for molding of the liquid crystal polyester can be more easily lowered.

In another aspect, the content of the structural unit (2) in the liquid crystal polyester, expressed on the basis of the number of structural units relative to the total number (100%) of all the structural units that constitute the liquid crystal polyester, is preferably mot more than 35%, and is more preferably from 10 to 35%, even more preferably from 15 to 35%, and still more preferably from 17.5 to 32.5%.

In another aspect, the content of the structural unit (3) in the liquid crystal polyester, expressed on the basis of the number of structural units relative to the total number (100%) of all the structural units that constitute the liquid crystal polyester, is preferably mot more than 35%, and is more preferably from 10 to 35%, even more preferably from 15 to 35%, and still more preferably from 17.5 to 32.5%.

In another aspect, in the liquid crystal polyester, the ratio between the number-based content of the structural unit (2) and the number-based content of the structural unit (3) is represented by [content of structural unit (2)] / [content of structural unit (3)] (number/number), and is preferably 0.9 or more and 1.1 or less, more preferably 0.95 or more and 1.05 or less, and even more preferably 0.98 or more and 1.02 or less.

In another aspect, in the liquid crystal polyester, the ratio between the number-based content of the structural unit (3) and the number-based content of the structural unit (1) is represented by [content of structural unit (3)] / [content of structural unit (1)] (number/number), and is preferably 0.2 or more and 1.0 or less, more preferably 0.25 or more and 0.85 or less, and even more preferably 0.3 or more and 0.75 or less.

In another aspect, the liquid crystal polyester may have only one type of each of the number-based structural units (1) to (3), or may have two or more types of each structural unit. Further, the liquid crystal polyester may have either one type, or two or more types of structural units other than the structural units (1) to (3), but the content of such other structural units relative to the total (100%) of all the structural units of the liquid crystal polyester is preferably 10% or less, and more preferably 5% or less.

The sum of the structural unit (1) of the above liquid crystal polyester resin, the structural unit (2) of the liquid crystal polyester and the structural unit (3) of the liquid crystal polyester must not exceed a number-based value of 100%.

In this description, the number of each structural unit (the degree of polymerization of each structural unit) means the value determined using the analysis method disclosed in JP2000-19168A.

Specifically, the liquid crystal polyester resin is reacted with a supercritical state lower alcohol (an alcohol of 1 to 3 carbon atoms) to depolymerize the liquid crystal polyester resin down to the constituent monomers that yield the structural units, and by using liquid chromatography to quantify the monomers that give rise to each of the structural units, obtained in the form of a depolymerization product, the number of each structural unit can be determined.
For example, in the case where the liquid crystal polyester resin is composed of the structural units (1) to (3), the number of the structural unit (1) can be determined by using liquid chromatography to calculate the molar concentrations of the monomers that yield the structural units (1) to (3), and then calculating the percentage of the molar concentration of the monomer that yields the structural unit (1) relative to a value of 100% for the total of the molar concentrations for all of the monomers that yield the structural units (1) to (3).

[Liquid Crystal Polyester Mixtures]

In one embodiment, a liquid crystal polyester mixture obtained by mixing a plurality of liquid crystal polyesters can also be used. This enables the melt fluidity of the liquid crystal polyester composition of this embodiment to be further improved, and can satisfactorily suppress warping of the obtained molded articles.
Here, the term "liquid crystal polyester mixture" is assumed to mean a mixture of liquid crystal polyesters having different flow staring temperatures. In the liquid crystal polyester mixture, the liquid crystal polyester having the higher flow staring temperature is defined as the first liquid crystal polyester, and the liquid crystal polyester having the lower flow staring temperature is defined as the second liquid crystal polyester.
The flow staring temperature of the first liquid crystal polyester is preferably 300°C or more, more preferably 310°C or more, and even more preferably 315°C or higher. The flow staring temperature of the first liquid crystal polyester is preferably 400°C or less, more preferably 360°C or less, and even more preferably 345°C or lower. The above upper limits and lower limits may be combined as appropriate.
Provided the flow staring temperature of the first liquid crystal polyester falls within the above range, a combination of favorable melt fluidity and superior heat resistance for the obtained molded articles tends to be achievable.
On the other hand, the flow staring temperature of the second liquid crystal polyester is preferably 260°C or more, more preferably 270°C or more, and even more preferably 285°C or higher. The flow staring temperature of the second liquid crystal polyester is preferably 350°C or less, more preferably 320°C or less, and even more preferably 315°C or lower. The above upper limits and lower limits may be combined as appropriate.
Provided the flow staring temperature of the second liquid crystal polyester falls within the above range, the fluidity within thin-walled portions of the mold (thin-wall fluidity) tend to be more favorable, and the deflection temperature under load for the obtained molded articles tends to increase satisfactorily.
Further, in the liquid crystal polyester mixture, the content of the second liquid crystal polyester per 100 parts by mass of the first liquid crystal polyester is preferably from 10 to 150 parts by mass, more preferably from 30 to 120 parts by mass, and even more preferably from 50 to 100 parts by mass.
The content of the second liquid crystal polyester relative to the first liquid crystal polyester may be set appropriately to ensure the desired balance between the deflection temperature under load and the thin-wall fluidity of the liquid crystal polyester mixture.
The liquid crystal polyester mixture may also contain another liquid crystal polyester besides the first liquid crystal polyester and the second liquid crystal polyester. In such cases, in the mixture, the liquid crystal polyester having the highest flow staring temperature is deemed the first liquid crystal polyester, and the liquid crystal polyester having the lowest flow staring temperature is deemed the second liquid crystal polyester. A liquid crystal polyester mixture composed of essentially the first liquid crystal polyester and the second liquid crystal polyester is ideal.
In the liquid crystal polyester mixture, $\alpha/\beta$ is preferably within a range from 0.1 or more and 0.6 or less, and is more preferably 0.3 or more and 0.6 or less.

$\alpha$ represents the molar ratio y/x for the first liquid crystal polyester.
$\beta$ represents the molar ratio y/x for the second liquid crystal polyester.
x represents the molar content of repeating units in which $Ar^2$ is a 1,4-phenylene group.
y represents the molar content of repeating units in which $Ar^2$ is a 1,3-phenylene group.

The content of liquid crystal polyester in the liquid crystal polyester composition of an embodiment, relative to the total mass (100% by mass) of the liquid crystal polyester composition of the embodiment, is preferably from 30 to 99.5% by mass, more preferably from 40 to 90% by mass, and even more preferably from 50 to 80% by mass.

[Method for Producing Liquid Crystal Polyester]

Next is a description of one example of a method for producing the liquid crystal polyester used in embodiments.

The liquid crystal polyester of an embodiment is preferably produced by an acylation step and polymerization step described below.

The acylation step is a step of acylating the phenolic hydroxyl groups of the raw material monomers with a fatty acid anhydride (such as acetic anhydride), thus obtaining an acylation product.

In the polymerization step, the acyl groups of the acylation product obtained in the acylation step, and the carbonyl groups within the carboxyl groups of the acylated products of the aromatic dicarboxylic acid and aromatic hydroxycarboxylic acid are polymerized by transesterification, thus obtaining a liquid crystal polyester.

The acylation step and the polymerization step may be conducted in the presence of a heterocyclic organic base compound represented by following formula (5).

[Chemical formula 1]

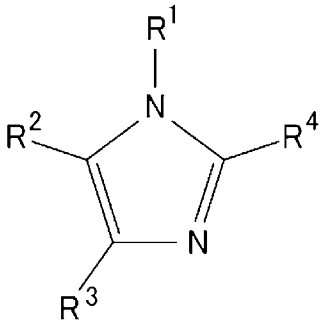

(5)

In the formula (5), $R^1$ to $R^4$ each independently represent a hydrogen atom, alkyl group of 1 to 4 carbon atoms, hydroxymethyl group, cyanoalkyl group containing an alkyl group of 1 to 4 carbon atoms, cyanoalkoxy group containing an alkoxy group of 1 to 4 carbon atoms, carboxyl group, amino group, aminoalkyl group of 1 to 4 carbon atoms, aminoalkoxy group of 1 to 4 carbon atoms, phenyl group, benzyl group, phenylpropyl group or formyl group.

The heterocyclic organic base compound represented by formula (5) is preferably an imidazole derivative in which $R^1$ is an alkyl group of 1 to 4 carbon atoms, and $R^2$ to $R^4$ each represent a hydrogen atom.

This enables the reactivity to be further improved in the acylation reaction in the acylation step and the transesterification reaction in the polymerization step.

Among the various possible heterocyclic organic base compounds, in terms of ease of availability, the use of either one or both of 1-methylimidazole and 1-ethylimidazole is particularly preferred.

Further, the amount used of the heterocyclic organic base compound, per 100 parts by mass relative to the total mass of the raw material monomers for the liquid crystal polyester (namely, the total mas of the aromatic dicarboxylic acid, aromatic diol, and aromatic hydroxycarboxylic acid and the like), is preferably from 0.005 to 1 part by mass. Furthermore, from the viewpoint of the productivity of the molded articles, an amount from 0.05 to 0.5 parts by mass per 100 parts by mass of the raw material monomers is more preferred.

The heterocyclic organic base compound may be present for one period during the acylation reaction and the transesterification reaction, and the addition period may be immediately prior to the start of the acylation reaction, during the acylation reaction, or between the acylation reaction and the transesterification reaction. The liquid crystal polyester obtained in this manner has extremely high melt fluidity and excellent thermal stability.

The amount used of the fatty acid anhydride (for example, acetic anhydride or the like) should be determined in consideration of the amounts used of the aromatic diol and aromatic hydroxycarboxylic acid used as raw material monomers. Specifically, the amount of the fatty acid anhydride, relative to the total amount of phenolic hydroxyl groups contained in these monomers, is preferably a 1.0-fold equivalence or more and a 1.2-fold equivalence or less, more preferably a 1.0-fold equivalence or more and a 1.15-fold equivalence or less, even more preferably a 1.03-fold equivalence or more and a 1.12-fold equivalence or less, and particularly preferably a 1.05-fold equivalence or more and a 1.1-fold equivalence or less.

Provided the amount used of the fatty acid anhydride relative to the total of all phenolic hydroxyl groups contained in the raw material monomers is a 1.0-fold equivalence or more, the acylation reaction proceeds more smoothly and unreacted raw material monomers are less likely to be retained in the subsequent polymerization step, meaning the polymerization proceeds efficiently. Further, when the acylation reaction proceeds satisfactorily in this manner, the possibility of unacylated raw materials sublimating and blocking the fractionator used during polymerization becomes less likely. On the other hand, provided the amount used of the fatty acid anhydride is a 1.2-fold equivalence or less, the obtained liquid crystal polyester is less likely to be colored.

The acylation reaction in the above acylation step is preferably conducted within a temperature range from

130°C to 180°C for a period of 30 minutes to 20 hours, and more preferably at a temperature of 140°C to 160°C for 1 to 5 hours.

The aromatic dicarboxylic acid used in the above polymerization step may be present in the reaction system during the acylation step. In other words, in the acylation step, the aromatic diol, the aromatic hydroxycarboxylic acid and the aromatic dicarboxylic acid may all exist within the same reaction system. This is because neither the carboxyl groups nor any optionally included substituents in the aromatic dicarboxylic acid are affected in any way by the fatty acid anhydride.

Accordingly, a method may be used in which the aromatic diol, the aromatic hydroxycarboxylic acid and the aromatic dicarboxylic acid are all added to the reactor, and the acylation reaction and the polymerization reaction are then conducted sequentially, or a method may be used in which the aromatic diol and the aromatic hydroxycarboxylic acid are first added to the reactor, and following completion of the acylation step, the aromatic dicarboxylic acid is then added to the reactor and the polymerization step is conducted. From the viewpoint of simplifying the production process, the former method is preferred.

The transesterification reaction in the polymerization step is preferably conducted while the temperature is raised from 130°C to 400°C at a rate of temperature increase of 0.1 to 50°C/minute, and is more preferably conducted while the temperature is raised from 150°C to 350°C at a rate of temperature increase of 0.3 to 5°C/minute.

Further, during the transesterification reaction of the polymerization step, in order to shift the equilibrium, a fatty acid (such an acetic acid and the like) produced as a by-product and unreacted fatty acid anhydride (such as acetic anhydride) is preferably evaporated and removed from the system. At this time, by refluxing a part of the distilled fatty acid and returning it to the reactor, raw material monomers and the like that have evaporated or sublimated together with the fatty acid can be condensed or reverse sublimated and returned to the reactor.

In the acylation reaction of the acylation step and the transesterification reaction of the polymerization step, either a batch apparatus or a continuous apparatus may be used as the reactor. Regardless of which reaction apparatus is used, a liquid crystal polyester that can be used in an embodiment can be obtained.

After the polymerization step described above, the liquid crystal polyester obtained in the polymerization step may be subjected to a step for increasing the molecular weight. For example, the liquid crystal polyester obtained in the polymerization step may be cooled and then crushed to produce a powdered liquid crystal polyester, and if this powder is then heated, the molecular weight of the liquid crystal polyester can be increased.

Further, the powdered liquid crystal polyester resin obtained by cooling and crushing may also be pelletized to produce pellets of the liquid crystal polyester, and by subsequently heating this pelletized liquid crystal polyester, the molecular weight of the liquid crystal polyester can be increased. Molecular weight increases conducted using these methods are referred to as solid phase polymerizations in the technical field.

Solid phase polymerization is particularly effective as a method for increasing the molecular weight of the liquid crystal polyester.

By increasing the molecular weight of the liquid crystal polyester, a liquid crystal polyester having the type of favorable flow staring temperature described below can be obtained more easily.

The reaction conditions for the solid phase polymerization typically employ a method in which the solid-state liquid crystal polyester is subjected to a heat treatment under an inert gas atmosphere or under reduced pressure for a period of 1 to 20 hours. The polymerization conditions for this solid phase polymerization may be optimized appropriately after determining the flow staring temperature of the liquid crystal polyester obtained in the above melt polymerization. Examples of the device used in the above heat treatment include conventional dryers, reactors, inert ovens and electric ovens.

The flow staring temperature of the liquid crystal polyester is preferably 270°C or more, and is more preferably from 270 to 400°C, and even more preferably from 280 to 380°C. By using a liquid crystal polyester having a flow staring temperature within this type of range, the heat resistance of a molded article obtained using the liquid crystal polyester composition of an embodiment can be further improved. Furthermore, during the melt molding conducted during formation of the molded article from the liquid crystal polyester composition, the thermal stability of the liquid crystal polyester improves, and thermal degradation can be avoided.

The flow starting temperature is also called the flow temperature or the fluidity temperature, and is the temperature at which the melt viscosity shows 4800 Pa·s (48000 poises) when a liquid crystal polyester is melted and extruded from a nozzle at a temperature increase rate of 4°C/min under a load of 9.8 MPa (100 kg/cm$^2$) by a capillary type rheometer equipped with a die having an inner diameter of 1 mm and a length of 10 mm. The flow starting temperature is a guide of the molecular weight of liquid crystal polyester (for example, see Naoyuki Koide (ed.), "Liquid Crystal Polymers - Synthesis, Molding, Applications", pages 95 to 105, CMC Publishing Co., Ltd., June 5, 1987).

A liquid crystal polyester having the favorable flow staring temperature described above can be easily obtained by appropriately optimizing the structural units that constitute the liquid crystal polyester. In other words, by improving the linearity of the molecular chain of the liquid crystal polyester, the flow staring temperature tends to increase.

For example, structural units derived from terephthalic acid improve the linearity of the liquid crystal polyester

molecular chain. On the other hand, structural units derived from isophthalic acid tend to improve the flexibility (and lower the linearity) of the liquid crystal polyester molecular chain. Accordingly, by controlling this copolymerization ratio between terephthalic acid and isophthalic acid, a liquid crystal polyester of the desired flow staring temperature can be obtained.

When an aforementioned liquid crystal polyester mixture is used, at least one kind of the liquid crystal polyesters is preferably a polymer obtained by polymerizing raw material monomers including an aromatic hydroxycarboxylic acid in the presence of an imidazole compound. The liquid crystal polyester obtained in this manner has an extremely high fluidity upon melting, and exhibits excellent thermal stability.

Further, in the liquid crystal polyester used in an embodiment, the copolymerization ratio between terephthalic acid and isophthalic acid is preferably optimized. This enables control of the linearity of the molecular chain of the liquid crystal polyester in the manner described above. As a result, a plurality of types of liquid crystal polyester having different flow staring temperatures can be produced.

<Other Components>

The liquid crystal polyester composition may also contain one or more other components such as inorganic fillers, organic fillers, additives, or resins other than the liquid crystal polyester or the like, provided the effects of the present invention are not impaired. However, in the liquid crystal polyester composition, the total (% by mass) of the liquid crystal polyester and any other components such as inorganic fillers does not exceed 100% by mass. In the following description, "resins other than the liquid crystal polyester" are sometimes referred to as "other resins".

[Inorganic Fillers]

When the liquid crystal polyester composition of an embodiment contains an inorganic filler, the content of the inorganic filler, relative to 100 parts by mass of the liquid crystal polyester, preferably exceeds 0 parts by mass but is 100 parts by mass or less, is more preferably 5 parts by mass or more and 100 parts by mass or less, even more preferably 20 parts by mass or more and 90 parts by mass or less, and particularly preferably 30 parts by mass or more and 85 parts by mass or less.

The inorganic filler may be a fibrous filler, a plate-like filler, or a granular filler.

Examples of the fibrous fillers include glass fibers; carbon fibers such a PAN carbon fibers and pitch carbon fibers; ceramic fibers such as silica fibers, alumina fibers and silica-alumina fibers; and metal fibers such as stainless steel fibers. Further examples include whiskers such as potassium titanate whiskers, barium titanate whiskers, wollastonite whiskers, aluminum borate whiskers, silicon nitride whiskers, and silicon carbide whiskers. Among these, glass fibers are preferred.

Examples of the plate-like fillers include talc, mica, graphite, wollastonite, glass flakes, barium sulfate and potassium carbonate. The mica may be muscovite, phlogopite, fluorine phlogopite, or tetrasilic mica. Among these, talc or mica is preferred.

Examples of the granular filler include silica, alumina, titanium oxide, glass beads, glass balloons, boron nitride, silicon carbide and calcium carbonate.

The inorganic filler is preferably at least one kind of filler selected from the group consisting of a glass fiber, talc and mica.

The percentage content of the inorganic filler in the liquid crystal polyester composition of an embodiment, relative to the total mass (100% by mass) of the liquid crystal polyester composition of the embodiment, is preferably from 0.3 to 65% by mass, more preferably 5 to 55% by mass, and even more preferably from 10 to 45% by mass.

(Glass Fiber)

Examples of the glass fiber include fibers produced by various methods, including a long fiber-type chopped glass fiber and a short fiber-type milled glass fiber and the like. In one embodiment, a combination of two or more types of glass fiber may also be used.

Examples of the types of glass fiber include E-glass, A-glass, C-glass, D-glass, AR-glass, R-glass, S-glass, and mixtures thereof. Among these, E-glass is preferred in terms of exhibiting excellent strength and being readily available.

Weakly alkaline fibers are excellent in terms of mechanical strength (tensile strength and Izod impact strength) and can be preferably used as the glass fiber. In particular, glass fibers containing silicon oxide in a content of 50% by mass or more and 80% by mass or less relative to the total mass of the glass fiber can be used favorably, and glass fibers containing 65% by mass or more and 77% by mass or less of silicone oxide can be used more favorably.

If necessary, the glass fibers may be fibers that have been treated with a coupling agent such as a silane-based coupling agent or a titanium-based coupling agent.

The glass fiber may be coated with a thermoplastic resin such as a urethane resin, acrylic resin or ethylene/vinyl acetate copolymer, or a thermosetting resin such as an epoxy resin. The glass fiber may also be treated with a bundling agent.

The number-average fiber length of the glass fiber used as the raw material supplied to the melt kneading process is preferably 50 μm or more and 3,500 μm or less. When the number-average fiber length of the glass fiber is 50 μm or more, the effect of the fibers as a reinforcing material in a molded article obtained from pellets (the liquid crystal polyester composition) containing the glass fiber can be enhanced further than the case where the number-average fiber length is less than 50 μm. The number-average fiber length of the glass fiber is more preferably 60 μm or more, and even more preferably 70 μm or greater.

Further, when the number-average fiber length of the glass fiber is 3,500 μm or less, adjustment of the number-average fiber length of the glass fiber in the pellets (the liquid crystal polyester composition) is easier than when the number-average fiber length exceeds 300 μm, and the thin-wall fluidity also improves. The number-average fiber length of the glass fiber is more preferably 3,000 μm or less.

The fiber diameter (monofilament diameter) of the glass fiber used as the raw material supplied to the melt kneading process is preferably 5 μm or more and 20 μm or less. When the fiber diameter of the glass fiber is 5 μm or more, the reinforcing effect on the molded articles can be enhanced more than when the fiber diameter is less than 5 μm. The fiber diameter of the glass fiber is more preferably 6 μm or more. Furthermore, when the fiber diameter of the glass fiber is 20 μm or less, the fluidity of the liquid crystal polyester composition improves more than when the fiber diameter exceeds 20 μm, and the effect of the glass fiber as a reinforcing material for the molded articles can be further improved. The fiber diameter of the glass fiber is more preferably 17 μm or less, and even more preferably 15 μm or less.

The glass fiber diameter undergoes essentially no change after melt kneading.

In this description, unless specifically stated otherwise, the "number-average fiber length of the raw material glass fiber" means the value measured using the method disclosed in JIS R3420 "7.8 Length of Chopped Strands".

Further, unless specifically stated otherwise the "fiber diameter of the raw material glass fiber" means the value measured using "method A" from among the methods disclosed in JIS R3420 "7.6 Single Fiber Diameter".

The content of the above glass fiber, relative to 100 parts by mass of the liquid crystal polyester, is preferably 5 parts by mass or more, more preferably 10 parts by mass or more, and even more preferably 15 parts by mass or greater. Further, the content of the above glass fiber, relative to 100 parts by mass of the liquid crystal polyester, is preferably 100 parts by mass or less, more preferably 80 parts by mass or less, and even more preferably 60 parts by mass or less. The above upper limits and lower limits may be combined as appropriate.

For example, the content of the above glass fiber, relative to 100 parts by mass of the liquid crystal polyester, is preferably 5 parts by mass or more and 100 parts by mass or less, more preferably 10 parts by mass or more and 80 parts by mass or less, and even more preferably 15 parts by mass or more and 60 parts by mass or less.

The number-average fiber length of the glass fiber within the pellets (the liquid crystal polyester composition) of an embodiment is preferably 30 μm or more, more preferably 50 μm or more, and even more preferably 60 μm or greater. On the other hand, from the viewpoint of improving the fluidity of the liquid crystal polyester composition, the number-average fiber length is preferably 300 μm or less, more preferably 200 μm or less, and even more preferably 150 μm or less.

In other words, the number-average fiber length of the glass fiber within the pellets (the liquid crystal polyester composition) of an embodiment is preferably 30 μm or more and 300 μm or less, more preferably 50 μm or more and 200 μm or less, and even more preferably 60 μm or more and 150 μm or less.

The number-average fiber length of the glass fiber within the pellets (the liquid crystal polyester composition) can be measured using the following method. First, 5 g of the pellets (liquid crystal polyester composition) are heated in the air at 600°C for 8 hours in a muffle furnace to remove the resin, a video microscope (VH1000, manufactured by Keyence Corporation) is then used to randomly select 500 or more individual glass fibers from among the residual glass fibers, and the fiber lengths of the selected glass fibers are measured at a magnification of 100 times. The number-average fiber length Ln can then be calculated from the formula below.

$$Ln = \Sigma(Ni \times Li)/\Sigma(Ni)$$

Li is the measured value of the fiber length of a glass fiber. Ni is the value obtained by dividing the number of glass fibers having a fiber length of Li by the total number of glass fibers measured.

(Talc)

Talc is a ground powder of a mineral composed of magnesium hydroxide and a silicate mineral. Further,

examples of the talc used in embodiments include minerals with a structure in which an octahedral structure formed by three magnesium (Mg) oxide and/or hydroxide is sandwiched between four tetrahedral structures formed from the oxides of four silicon (Si) atoms.

Examples of the method used for producing the talc used in an embodiment include conventional methods for producing, and examples include dry grinding methods including milling-based grinding methods using a roller mill or Raymond mill or the like, impact grinding methods using an atomizer, hammer mill, or micron mill or the like, and collision-based grinding methods using a jet mill, or ball mill or the like.

Further, a wet grinding method in which the ground talc powder is dispersed with water to form a slurry of viscosity that enables fluidity, and pulverized by a ball mill, beads mill, wet jet mill, or Discoplex or the like may be used. Among the above production methods, dry grinding methods are preferred in terms of lower cost and ease of availability.

The surface of the talc may be treated with a coupling agent to improve the wetting characteristics between the talc and the liquid crystal polyester. Further, in order to remove impurities and harden the talc, a talc that has been subjected to a heat treatment may also be used. Furthermore, a compressed talc may also be used to facilitate handling.

The 45 μm sieve residue of the talc is preferably 1.0% by mass or less. Provided the 45 μm sieve residue is 1.0% by mass or less, blockages in the thin-wall portions of the mold can be suppressed, the moldability can be improved, and the thin-wall strength of the obtained molded articles can be increased when molded articles are molded from pellets (the liquid crystal polyester composition) of an embodiment. The 45 μm sieve residue contained within the talc is preferably 0.8% by mass or less, and more preferably 0.6% by mass or less, of the total mass of the talc.

In this description, the 45 μm sieve residue of the talc is defined as a value measured in accordance with JIS K 5101-14-1 "Test methods for pigments - Part 14: Sieve Residues - Section 1: Wet method (Manual procedure)"

The ignition loss (Ig. Loss) of the talc is preferably 7% by mass or less, more preferably 6% by mass or less, and particularly preferably 5% by mass or less. The lower the Ig. Loss, the better decomposition of the liquid crystal polyester is suppressed, and the less likely blistering is to occur. In this description, Ig. Loss is defined as a value measured in accordance with JIS M8853.

In one embodiment, the volume-average particle size of the talc is preferably 5.0 μm or more, more preferably 5.5 μm or more, and even more preferably 6.0 μm or greater. Further, the volume-average particle size is preferably 25 μm or less, more preferably 24.5 μm or less, and even more preferably 24 μm or less. The above upper limits and lower limits may be combined as appropriate.

For example, the volume-average particle size of the talc is preferably 5.0 μm or more and 25 μm or less, more preferably 5.5 μm or more and 24.5 μm or less, and even more preferably 6.0 μm or more and 24 μm or less.

In embodiments, the volume-average particle size of the talc can be measured using a laser diffraction measurement method. Using a scattering-type particle size distribution analyzer (for example, LA-950V2 manufactured by Horiba, Ltd.) as a measurement device, the volume-average particle size can be measured under the following measurement conditions with the talc dispersed in water.

(Measurement Conditions)

Particle refractive index: 1.59-0.1i
Dispersion medium: water
Dispersion medium refractive index: 1.33

In an embodiment, the content of the talc, relative to 100 parts by mass of the liquid crystal polyester, is preferably 5 parts by mass or more, more preferably 10 parts by mass or more, and particularly preferably 30 parts by mass or greater. Further, the content of the talc, relative to 100 parts by mass of the liquid crystal polyester, is preferably 100 parts by mass or less, more preferably 80 parts by mass or less, and particularly preferably 65 parts by mass or less.

The above upper limits and lower limits may be combined as appropriate.

For example, the content of the talc, relative to 100 parts by mass of the liquid crystal polyester, is preferably 5 parts by mass or more and 100 parts by mass of less, more preferably 10 parts by mass or more and 80 parts by mass or less, and particularly preferably 30 parts by mass or more and 65 parts by mass or less.

(Mica)

Mica is a ground powder of a silicate mineral containing aluminum, potassium, magnesium, sodium, and iron and the like. Further, mica is a mineral with a structure in which an octahedral structure formed by two or three metal oxides or hydroxides molecules is sandwiched between four tetrahedral structures formed from the oxides of three silicon (Si) atoms and one aluminum (Al) atom.

The mica used in embodiments may be any one of muscovite, phlogopite, fluorine phlogopite, tetrasilic mica, and artificially produced synthetic mica. Combinations of two or more types of mica may also be used.

The mica used in embodiments is preferably composed essentially entirely of muscovite.

Examples of the method for producing the mica used in an embodiment include water-stream jet grinding methods, wet grinding methods, dry ball mill grinding methods, pressurized roller mill grinding methods, air-stream jet mill grinding methods, and dry grinding methods using an impact grinder such as an atomizer. In terms of enabling the mica to be ground thinly and finely, the use of mica produced by a wet grinding method is preferred.

When a wet grinding method is used, the mica is dispersed in water prior to grinding. In order to enhance the dispersion efficiency of the unground mica in the water, an additive such as a flocculation-sedimentation agent or flocculant, such as polyaluminum chloride, aluminum sulfate, ferrous sulfate, ferric sulfate, cuprous chloride, polyiron sulfate, polyferric chloride, iron-silica inorganic polymer coagulants, ferric chloride-silica inorganic polymer coagulants, slaked lime ($Ca(OH)_2$), caustic soda (NaOH) or soda ash ($Na_2CO_3$) is typically added to the water. However, these additives sometimes cause decomposition of the liquid crystal polyester. Accordingly, the mica used in an embodiment is preferably a mica for which a flocculation-sedimentation agent and/or flocculant have not been used during the wet grinding.

In one embodiment, the volume-average particle size of the mica is preferably 20 μm or more, more preferably 21 μm or more, and even more preferably 22 μm or greater. Further, the volume-average particle size is preferably 45 μm or less, more preferably 44 μm or less, and even more preferably 43 μm or less. The above upper limits and lower limits may be combined as appropriate.

For example, the volume-average particle size of the mica is preferably 20 μm or more and 45 μm or less, more preferably 21 μm or more and 44 μm or less, and even more preferably 22 μm or more and 43 μm or less.

In embodiments, the volume-average particle size of the mica can be measured using a laser diffraction measurement method. Using a scattering-type particle size distribution analyzer (for example, LA-950V2 manufactured by Horiba, Ltd.) as a measurement device, the volume-average particle size can be measured under the following measurement conditions with the mica dispersed in water.

(Measurement Conditions)

Particle refractive index: 1.57-0.1i
Dispersion medium: water
Dispersion medium refractive index: 1.33

The affinity is favorable between a mica having this type of volume-average particle size and the liquid crystal polyester, enabling the fluidity of the liquid crystal polyester composition of an embodiment to be further improved.

The content of the mica, relative to 100 parts by mass of the liquid crystal polyester, is preferably 5 parts by mass or more, more preferably 10 parts by mass or more, and particularly preferably 30 parts by mass or greater. Further, the content of the mica, relative to 100 parts by mass of the liquid crystal polyester, is preferably 100 parts by mass or less, more preferably 85 parts by mass or less, even more preferably 65 parts by mass or less, and particularly preferably 20 parts by mass or less. The above upper limits and lower limits may be combined as appropriate.

For example, the content of the mica, relative to 100 parts by mass of the liquid crystal polyester, is preferably 5 parts by mass or more and 100 parts by mass or less, more preferably 10 parts by mass or more and 85 parts by mass or less, and even more preferably 30 parts by mass or more and 65 parts by mass or less.

With a liquid crystal polyester composition in which the content of the mica falls within this type of range, the heat resistance of the molded articles is also favorable.

[Organic Fillers]

When the liquid crystal polyester composition of an embodiment contains an organic filler, the content of the organic filler in the liquid crystal polyester composition preferably exceeds 0 parts by mass but is 100 parts by mass or less, per 100 parts by mass of the total content of liquid crystal polyester.

The organic filler used in an embodiment may be a fibrous filler, a plate-like filler, or a granular filler.

Examples of fibrous fillers include polyester fibers, aramid fibers and cellulose fibers. Examples of granular fillers include insoluble and infusible polymers such as para-hydroxybenzoic acid homopolymers.

[Additives]

When the liquid crystal polyester composition of an embodiment contains one or more additives, the content of those additives in the liquid crystal polyester composition is preferably greater than 0 parts by mass but 5 parts by mass or less per 100 parts by mass of the total content of liquid crystal polyester.
Examples of the additives include various additives known in the technical field.
Specific examples of these additives known in the technical field include release agents such as higher fatty acid esters and metal soaps, colorants such as dyes and pigments, as well as antioxidants, thermal stabilizers, ultraviolet absorbers, antistatic agents, surfactants, flame retardants, flame retardancy assistants, and plasticizers.
Additional examples of the additives include additives having an external lubricant effect such as higher fatty acids, higher fatty acid esters and fluorocarbon-based surfactants. The types and amounts used of these surfactants are determined so as not to impair the effects of the present invention. The amount of additives is preferably from 0.01 to 5 parts by mass per 100 parts by mass of the liquid crystal polyester.

(Carbon Black)

A carbon black is preferably used as a colorant in embodiments.
Examples of carbon blacks that may be used in embodiments include channel black, furnace black, lamp black, thermal black, Ketjen black, and naphthalene black and the like. Two or more of these carbon blacks may also be used. Among these, furnace black and lamp black carbon blacks can be used particularly favorably, but any typically available carbon black colorant may be used, provided the carbon black has the desired characteristics described above. The content of the carbon black, relative to 100 parts by mass of the liquid crystal polyester, is preferably from 0.1 to 2.5 parts by mass, and more preferably from 0.2 to 2.0 parts by mass.

(Release Agents)

In embodiments, by including a release agent in the liquid crystal polyester composition, the moldability can be improved. Examples of the release agent include tetrafluoroethylene, montanoic acid and salts, esters and half esters thereof, stearyl alcohol, stearamide, and polyethylene wax, and preferred release agents include tetrafluoroethylene or a pentaerythritol fatty acid ester.
The content of the release agent, relative to 100 parts by mass of the liquid crystal polyester, is preferably from 0.1 to 1.0 parts by mass, and more preferably from 0.2 to 0.7 parts by mass. Provided the content of the release agent falls within this range, mold contamination and blistering or the like of the molded articles tend to be less likely to occur, and a favorable release effect is obtained.

(Antioxidants, Thermal Stabilizers)

In embodiments, compounds such as hindered phenols, hydroquinone, phosphites, or substituted forms of these compounds are preferably used as antioxidants or thermal stabilizers.

(Ultraviolet Absorbers)

In embodiments, compounds such as resorcinol, salicylates, benzotriazole and benzophenone are preferably used as ultraviolet absorbers.
Examples of other resins include thermoplastic resins other than aromatic polysulfones, such as polypropylene, polyamide, polyester other than liquid crystal polyester, polyphenylene sulfide, polyethersulfone, polyether ketone, polycarbonate, polyphenylene ether and polyetherimide; and thermosetting resins such as phenol resins, epoxy resins, polyimide resins and cyanate resins.
When the liquid crystal polyester composition of an embodiment contains another resin, the content of the other resin is preferably greater than 0 parts by mass but 20 parts by mass or less, per 100 parts by mass of the total content of all the liquid crystal polyester.
In another aspect, in one example of the liquid crystal polyester composition of an embodiment, relative to the total mass (100% by mass) of the liquid crystal polyester composition of the embodiment,

it is preferable that the percentage content of the liquid crystal polyester is from 30 to 99.5% by mass,
the percentage content of the fatty acid metal salt is from 0.001 to 5% by mass, and
the percentage content of the inorganic filler is from 0.3 to 65% by mass,
it is more preferable that the percentage content of the liquid crystal polyester is from 40 to 90% by mass,

the percentage content of the fatty acid metal salt is from 0.002 to 3% by mass, and
the percentage content of the inorganic filler is from 5 to 55% by mass, and
it is even more preferable that the percentage content of the liquid crystal polyester is from 50 to 80% by mass,
the percentage content of the fatty acid metal salt is from 0.003 to 0.5% by mass, and
the percentage content of the inorganic filler is from 10 to 45% by mass.

In another aspect, in one example of the liquid crystal polyester composition of an embodiment, relative to the total mass (100% by mass) of the liquid crystal polyester composition of the embodiment,

it is preferable that the percentage content of the liquid crystal polyester is from 30 to 99.5% by mass,
the percentage content of at least one kind of fatty acid metal salt selected from the group consisting of calcium laurate and lithium laurate is from 0.001 to 5% by mass, and
the percentage content of at least one kind of inorganic filler selected from the group consisting of a glass fiber, talc and mica is from 0.3 to 65% by mass,
it is more preferable that the percentage content of the liquid crystal polyester is from 40 to 90% by mass,
the percentage content of at least one kind of fatty acid metal salt selected from the group consisting of calcium laurate and lithium laurate is from 0.002 to 3% by mass, and
the percentage content of at least one kind of inorganic filler selected from the group consisting of a glass fiber, talc and mica is from 5 to 55% by mass, and
it is even more preferable that the percentage content of the liquid crystal polyester is from 50 to 80% by mass,
the percentage content of at least one kind of fatty acid metal salt selected from the group consisting of calcium laurate and lithium laurate is from 0.003 to 0.5% by mass, and
the percentage content of at least one kind of inorganic filler selected from the group consisting of a glass fiber, talc and mica is from 10 to 45% by mass.

(Pellets)

In the liquid crystal polyester composition, there are no particular limitations on the form in which the fatty acid metal salt is included. Liquid crystal polyester compositions of embodiments are deemed to include pellets containing the liquid crystal polyester. In such cases, the fatty acid metal salt may exists inside the pellets, may exist in an external part that includes the surfaces of the pellets, or may exist in both (the inside of the pellets and the external part).
The liquid crystal polyester composition of one embodiment includes contains pellets containing the liquid crystal polyester, wherein at least a part of the fatty acid metal salt is preferably attached to the surfaces of the pellets.
In other words, the liquid crystal polyester composition of one embodiment may be pellets of the liquid crystal polyester composition, wherein the fatty acid metal salt is attached to the surfaces of the pellets, and either a solid of the fatty acid metal salt may be attached to the surfaces of the pellets, or a powder of the fatty acid metal salt may be attached to the surfaces of the pellets.
Here, the term "attached" includes states in which the fatty acid metal salt directly contacts the surface of the pellet body. The fatty acid metal salt may or may not exhibit some form of interaction such as chemical bonding with the surfaces of the pellets.
Pellets are suitable for a molding material for injection molding. It is thought that by having the fatty acid metal salt attached to the surfaces of the pellets, the action of the fatty acid metal salt as a lubricant can manifest more favorably. As a result, it is thought that the pellets can be fed more easily by the screw of the injection molding machine, enabling a shortening of the plasticizing time during injection molding.
There are no particular limitations on the length or shape of the pellets of embodiments, and the length and shape may be selected in accordance with the intended purpose.
The length of the pellets is preferably 2 mm or more and 4 mm or less, and more preferably 2.5 mm or more and 4 mm or less.
Pellets of an embodiment can be obtained, for example, by extruding the liquid crystal polyester composition from an extruder in a strand-like form, and then cutting the strand with a cutter having a rotary blade.
Examples of the shape of the pellets include spherical shapes, strip shapes, rotated oval shapes, slightly deformed shapes of true rotated oval shapes, and circular cylindrical shapes. Among these, cylindrical pellets in which the cut surfaces are substantially elliptical are preferred.
FIG. 1 is a schematic representation illustrating one example of a pellet of an embodiment. The pellet 1 has a powdered fatty acid metal salt 12 on the surface of a circular cylindrical pellet body 11. The pellet body 11 contains the liquid crystal polyester, and if necessary may also contain other optional components such as an inorganic filler or the like.
For pellets of embodiments, although there are no particular limitations on the major diameter of a pellet cross section, the major diameter is preferably 1 mm or more and 5 mm or less, more preferably 2 mm or more and 4 mm or

less, and even more preferably 2 mm or more and 3.5 mm or less.

Further, for pellets of embodiments, although there are no particular limitations on the minor diameter of a pellet cross section, the minor diameter is preferably 1 mm or more and 5 mm or less, and more preferably 2 mm or more and 3 mm or less.

Furthermore, although there are no particular limitations on the ratio between the major diameter and the minor diameter of a cross section of the pellets (major diameter/minor diameter), the ratio is preferably from 1 to 4.

In this description, the "pellet length" means the longest length among each of the lengths that represent the long edge of a series of rectangular shapes that circumscribe projected images of the pellet from all directions. The circumscribing rectangles are set so as to minimize the area of the rectangle.

In this description, the "major diameter of a pellet cross section" means the length of a straight line that connects the two most distant points on the outer periphery of the sectional plane in the cross section of the pellet.

In this description, the "minor diameter of a pellet cross section" means the length of a straight line that is perpendicular to the major diameter, and connects the two most distant points on the outer periphery of the sectional plane in the cross section of the pellet.

The major diameter and minor diameter of a pellet cross section can be controlled, for example, by adjusting the nozzle diameter of the extruder, thereby altering the strand diameter.

Among the various possibilities described above, for pellets of an embodiment, it is particularly desirable that the pellet length is 2 mm or more and 4 mm or less, the major diameter of a pellet cross section is 2 mm or more and 4 mm or less, and the minor diameter of a pellet cross section is 2 mm or more and 3 mm or less.

The pellet volume may be, for example, from 1 to 80 $mm^3$, from 6 to 50 $mm^3$, or from 6 to 40 $mm^3$.

The surface area of a pellet may be, for example, from 7 to 110 $mm^2$, from 18 to 80 $mm^2$, or from 18 to 65 $mm^2$.

(Use)

The liquid crystal polyester composition of an embodiment is preferably used as a molding material used in the production of injection molded articles.

From the viewpoint of ensuring that the shortening effect on the plasticizing time of the fatty acid metal salt according to an embodiment is able to manifest as easily as possible, in one example, the pellets of the embodiment are preferably used as a molding material for an injection molding machine with a maximum clamping force of 400 kN or less, preferably used as a molding material for an injection molding machine with a maximum clamping force of 100 kN or more and 400 kN or less, more preferably used as a molding material for an injection molding machine with a maximum clamping force of 150 kN or more and 380 kN or less, and even more preferably used as a molding material for an injection molding machine with a maximum clamping force of 200 kN or more and 350 kN or less.

The liquid crystal polyester composition of an embodiment exhibits a particularly superior shortening effect on the plasticizing time in a injection molding machine having the maximum clamping force described above.

The pellets of an embodiment, in one example, are preferably used as a molding material for an injection molding machine having a screw diameter (diameter of screw) of 20 mm or less, preferably used as a molding material for an injection molding machine having a screw diameter of 10 mm or more and 20 mm or less, and more preferably used as a molding material for an injection molding machine having a screw diameter of 14 mm or more and 18 mm or less.

The liquid crystal polyester composition of an embodiment exhibits a particularly superior shortening effect on the plasticizing time in a injection molding machine having the type of screw diameter described above.

The reasons why the liquid crystal polyester composition of an embodiment exhibits particularly superior effects in the type of small injection molding machine having the maximum clamping force and screw diameter described above are not clear. However, it is thought that in small injection molding machines, blockages and jamming of the pellets when feeding the pellets with the screw, leading to pellet feed problems, are more likely to occur than in larger injection molding machines. Accordingly, it is surmised that the effects of the fatty acid metal salt are reflected more sensitively in smaller injection molding machines.

In this manner, the liquid crystal polyester composition of an embodiment is ideal and extremely useful as a molding material for injection molding machines of various sizes.

<<Method for Producing Liquid Crystal Polyester Composition>>

A method for producing a liquid crystal polyester composition according to an embodiment comprises a mixing step of mixing a liquid crystal polyester and a fatty acid metal salt, wherein the fatty acid metal salt comprises a fatty acid metal salt of which the number of carbon atoms is 20 or less, and a sieve residue of the fatty acid metal salt measured in accordance with JIS K 0069 for a sieve with a nominal opening of 106 μm prescribed in JIS Z 8801 is from 0 to 80% by mass relative to the total mass of the fatty acid metal salt.

Examples of the components that are mixed in the mixing step , in addition to the liquid crystal polyester and

the fatty acid metal salt, include other components that may be used as necessary, such as inorganic fillers or the like. Examples of these components are described above in the section entitled <<Liquid Crystal Polyester Composition>>. Examples of the fatty acid metal salt mixed in the mixing step include powders that satisfy the sieve residue requirement described above.

The mixing step may comprise a process for adhering the fatty acid metal salt to the surfaces of pellets containing the liquid crystal polyester.

First, the liquid crystal polyester that constitutes the pellets, and any other components that may be used as necessary such as inorganic fillers or the like are melt kneaded and granulated using an extruder, thus obtaining pellets.

Next, the obtained pellets and the fatty acid metal salt are mixed. This operation enables the fatty acid metal salt to be attached to the surfaces of the pellets. The mixing may be conducted using a conventional mixing device. There are no particular limitations on the mixing device, and examples include tumbler mixers and the like. Further, there are no particular limitations on the mixing sequence of the fatty acid metal salt with the pellets.

One example of the method for producing a liquid crystal polyester according to an embodiment comprises:

a step of obtaining pellets by using an extruder to melt knead and granulate a liquid crystal polyester that constitutes the pellets, and any other components that may be used as necessary such as inorganic fillers or the like, and
a step of mixing the pellets and a fatty acid metal salt.

By using the method for producing a liquid crystal polyester composition according to an embodiment, the liquid crystal polyester composition of an embodiment described above can be produced. The liquid crystal polyester composition of the present invention is not limited to compositions produced using the method for producing a liquid crystal polyester composition of the embodiment described above.

<<Injection Molded Article>>

A molded article of an embodiment uses the liquid crystal polyester composition described above as a molding material.

The molding method for the molded article of an embodiment is preferably a melt molding method. Examples of such methods include injection molding methods, extrusion molding methods such as T-die methods and inflation methods, compression molding methods, blow molding methods, vacuum molding methods and press molding methods, and among these, an injection molding method is preferred. In other words, the molded article of an embodiment is preferably an injection molded article produced using the liquid crystal polyester composition described above as a molding material.

The molded article of an embodiment is ideal for use in molded articles requiring thermal deformation resistance, including not only electronic components, but also OA and AV components and heat-resistant tableware and the like.

Examples of products and components formed from molded articles of embodiments include bobbins such as optical pickup bobbins and transformer bobbins; relay components such as relay cases, relay bases, relay sprues and relay armatures; connectors such as RIMM, DDR and CPU sockets, as well as S/O, DIMM and Board to Board connectors, FPC connectors and card connectors; reflectors such as lamp reflectors and LED reflectors; holders such as lamp holders and heater holders; diaphragms such as speaker diaphragms; separation claws such as separation claws for copiers and separation claws for printers; camera module components; switch components; motor components; sensor components; hard disk drive components; tableware such as ovenware; vehicle components; battery components; aircraft components; and sealing members such as sealing members for semiconductor elements and sealing members for coils.

<<Method for Producing Injection Molded Article>>

A method for producing an injection molded article according to an embodiment comprises a step of injection molding a liquid crystal polyester composition to obtain the injection molded article.

The method for producing an injection molded article of an embodiment preferably involves injection molding the liquid crystal polyester composition using an injection molding machine having a maximum clamping force of 400 kN or less. Examples of the numerical value (of 400 kN or less) for the maximum clamping force of the injection molding machine are described above <<Liquid Crystal Polyester Composition>>.

The liquid crystal polyester composition of an embodiment exhibits a particularly superior shortening effect on the plasticizing time in the production of an injection molded article using an injection molding machine having the maximum clamping force described above.

The method for producing an injection molded article of an embodiment preferably involves injection molding the liquid crystal polyester composition using an injection molding machine having a screw diameter of 20 mm or less.

Examples of the numerical value (of 20 mm or less) for the screw diameter of the injection molding machine are described above <<Liquid Crystal Polyester Composition>>.

The liquid crystal polyester composition of an embodiment exhibits a particularly superior shortening effect on the plasticizing time in the production of an injection molded article using an injection molding machine fitted with a screw having the diameter described above.

The method for producing an injection molded article of an embodiment may comprise a step of injection molding a liquid crystal polyester composition containing a liquid crystal polyester recycled material to obtain the injection molded article.

Examples of the recycled material comprise the runners and sprues produced at the same time as the product portions in the injection molded article production process, as well as defective products. The recycled material may be prepared by crushing the runners or the like, or by remelting the recycled material and then producing pellets.

The recycled material may be obtained from any composition containing a liquid crystal polyester, but is preferably a recycled material of a liquid crystal polyester composition of an embodiment.

A liquid crystal polyester composition containing a liquid crystal polyester recycled material may include the liquid crystal polyester composition that yielded the recycled material, and the liquid crystal polyester itself. In other words, a molding material (liquid crystal polyester composition) used as the raw material when obtaining the recycled material, and a molding material (liquid crystal polyester composition) having the same components (and preferably the same composition) as that molding material may be mixed.

Examples of recycled materials of liquid crystal polyester compositions of embodiments that may be used include injection molded articles (including runners and sprues) of liquid crystal polyester compositions of embodiments.

When the recycled material is a recycled material of pellets having a fatty acid metal salt attached to the surfaces, the molding process of the recycled material may cause the fatty acid metal salt that existed at the surface to be kneaded into the interior of the molded article. Accordingly, with the recycled material, there is a possibility that the shortening effect on the plasticizing time provided by the fatty acid metal salt may deteriorate relatively.

However, the liquid crystal polyester composition of an embodiment has an extremely superior plasticizing time shortening effect due to containing the specified fatty acid metal salt, and therefore even when the composition is used as a recycled material in a molding material, an excellent plasticizing time shortening effect can be realized.

When the liquid crystal polyester composition used in the injection molding contains a liquid crystal polyester recycled material, the ratio between the recycled material and the virgin material (new material that has undergone no processing except for pelletization), expressed as a mass ratio of recycled material: virgin material, may be, for example, from 1:99 to 80:20, from 10:90 to 70:30, or from 20:80 to 60:40. Examples

The present invention is describe below in further detail using a series of examples, but the present invention is not limited to the following examples. The various measurements were conducted using the methods described below.

<Measurements>

(Liquid crystal polyester flow staring temperature)

Using a flow tester (model CFT-500EX, manufactured by Shimadzu Corporation), approximately 2 g of the liquid crystal polyester was placed in a cylinder fitted with a die having a nozzle with an inner diameter of 1 mm and a length of 10 mm, and the temperature at which the melt viscosity shows 4800 Pa·s was measured when a liquid crystal polyester is melted and extruded from the nozzle at a temperature increase rate of 4°C/min under a load of 9.8 MPa, and this temperature was defined as the flow staring temperature.

(Melting point of fatty acid metal salt)

The melting point was measured using a differential scanning calorimeter (DSC-50, manufactured by Shimadzu Corporation). For each fatty acid metal salt, the position of the peak of the high-temperature side endothermic peak when the temperature was raised at a rate of 20°C/minute was deemed the melting point.

(Mass loss ratio of fatty acid metal salt)

First, the fatty acid metal salt was subjected to a heat treatment in the open atmosphere by holding the temperature at 160°C for 48 hours and then cooling to room temperature. The mass (g) of the fatty acid metal salt prior to the heat treatment and then after the heat treatment were measured, and the mass loss ratio (%) was calculated using the following formula.

Fatty acid metal salt mass loss ratio (%) = (mass (g) of fatty acid metal salt prior to heat treatment - mass (g) of fatty acid metal salt after heat treatment) ÷ mass (g) of fatty acid metal salt prior to heat treatment × 100

(Average particle size of fatty acid metal salt determined by microscope inspection)

Using observation images obtained by viewing the fatty acid metal salt under a video microscope (VHZ-ST, manufactured by Keyence Corporation) at a magnification from 200 times to 1,000 times, the particle sizes (the length of a straight line connecting the two most distant points on the outer periphery of the particle image) of 200 or more randomly selected primary particles were measured, and the arithmetic mean value of the obtained values was determined.

(Fatty acid metal salt sieve residues)

Using sieves (frame diameter: 200 mm, plain weave) prescribed in JIS Z 8801 (2019), a particle size distribution was measured by conducting dry mechanical sieving at a temperature of 23°C and a humidity of 50% RH in accordance with JIS K 0069.

The sieves used had a nominal opening of 250 μm (wire diameter: 160 μm), a nominal opening of 180 μm (wire diameter: 125 μm), a nominal opening of 106 μm (wire diameter: 75 μm), and a nominal opening of 75 μm (wire diameter: 50 μm) respectively.

The sieve was installed in an electric vibration sieving machine (manufactured by Nitto Kagaku Co., Ltd.), 100 g of the measurement sample was placed on the sieve, and sieving was conducted for 10 minutes. The sieves were not stacked, but rather sieving was conducted with each sieve independently, with the sieve residue being determined using the following formula.

Sieve residue (% by mass) = mass (g) of sample remaining on sieve after sieving ÷ total mass (g) of sample used for sieving × 100

<Production of Liquid Crystal Polyester>

A reactor fitted with a stirrer, a torque meter, a nitrogen gas inlet, a thermometer and a reflux condenser was charged with 994.5 g (7.2 mol) of 4-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid and 1,347.6 g (13.2 mol) of acetic anhydride, 0.2 g of 1-methylimidazole was then added as a catalyst, and the inside of the reactor was flushed thoroughly with nitrogen gas.

Subsequently, the temperature was raised from room temperature to 150°C over a period of 30 minutes while the contents were stirred under a stream of nitrogen gas, and that temperature was then maintained while the contents were refluxed for 30 minutes.

Next, an additional 2.4 g of 1-methylimidazole was added, the temperature was raised from 150°C to 320°C over a period of 2 hours and 50 minutes and then held at 320°C for 30 minutes while the by-product acetic acid and unreacted acetic anhydride were removed by distillation, and the contents of the reactor were then removed and cooled to room temperature.

The thus obtained solid product was crushed to a particle size of 0.1 to 1 mm using a grinder, and a solid phase polymerization was then conducted under a nitrogen atmosphere by raising the temperature from room temperature to 250°C over a period of one hour, then raising the temperature from 250°C to 295°C over a period of 5 hours, and then holding the temperature at 295°C for 3 hours. Following the solid phase polymerization, the product was cooled to obtain a powdered liquid crystal polyester. The flow staring temperature of the thus obtained liquid crystal polyester was 327°C.

<Fatty Acid Metal Salts>

Commercially available products of the following fatty acid metal salts were used. Unless specifically stated otherwise, the commercially available product was used without any modification.

Calcium laurate: CS-3, manufactured by Nitto Chemical Industry Co., Ltd.
Lithium laurate: LS-3, manufactured by Nitto Chemical Industry Co., Ltd.
Lithium stearate: Li-St, manufactured by Nitto Chemical Industry Co., Ltd.
Calcium stearate: Ca-St, manufactured by Nitto Chemical Industry Co., Ltd.
Barium stearate: Ba-St, manufactured by Nitto Chemical Industry Co., Ltd.
Lithium behenate: LS-7, manufactured by Nitto Chemical Industry Co., Ltd.
Calcium montanate: CS-8, manufactured by Nitto Chemical Industry Co., Ltd.
Lithium montanate: LS-8, manufactured by Nitto Chemical Industry Co., Ltd.

[Example 1]

(Production of pellets)

First, the liquid crystal polyester produced above (64 parts by mass) and a plate-like inorganic filler mica (YM-25S, manufactured by Yamaguchi Mica Co., Ltd.) (36 parts by mass) were melt kneaded using a twin-screw extruder (PCM-30, manufactured by Ikegai, Ltd.) under conditions including a cylinder temperature of 340°C and a screw rotational rate of 150 rpm, thus obtaining a melt kneaded product. Subsequently, the obtained melt kneaded product was discharged through a circular discharge port as a strand, and following cooling, the strand was pelletized (cut) to obtain pre-pellets of liquid crystal polyester.
Subsequently, a fatty acid metal salt (calcium laurate) was coated onto the surfaces of the obtained pre-pellets in the proportion shown in Table 1. The fatty acid metal salt was added in the form of a solid-state powder under an atmosphere at 25°C. Following addition of the fatty acid metal salt, a tumbler mixer (SKD-25, manufactured by PLAENG) was used to conduct mixing for 10 minutes at a rotational rate of 30 rotations/minute, thus obtaining pellets of Example 1.
In Tables 1 to 4, the content added of the fatty acid metal salt refers to the added percentage (% by mass) of the fatty acid metal salt relative to the total mass of the pellets following addition of the fatty acid metal salt (namely, the combined mass of the liquid crystal polyester, the inorganic filler, and the added fatty acid metal salt).

(Production of injection molded article and measurement of plasticizing time)

Using the injection molding machine described in the molding conditions 1 outlined below, the pellets of the above Example 1 were used as a molding material to mold a test piece for measuring thin-wall flow length with a thickness of 0.3 mm (see FIG. 2, numerical units: mm) under the molding conditions 1 described below.
Subsequently, the test piece was ground using a GranCutter SPC-II400 manufactured by Harmo Co., Ltd. to obtain a ground product. In this example, this ground product represents the recycled material of the molding conditions 1.
Next, using the recycled material obtained above (50 parts by mass) and the pellets of Example 1 (50 parts by mass) as molding materials, a test piece for measuring thin-wall flow length with a thickness of 0.3 mm (see FIG. 2) was molded under the molding conditions 1 described below.
The plasticizing time was measured during molding for 300 consecutive shots, the average value (seconds) and standard deviation (seconds) were determined, and the average value was deemed the plasticizing time. The standard deviation was recorded as the variation.

(Molding conditions 1)

Injection molding machine: Roboshot S2000i-30B, manufactured by FANUC Corporation
Cylinder temperatures: nozzle 340°C, front section 340°C, middle section 330°C, rear section 310°C
Mold temperature: 130°C
Injection speed: 200 mm/second
Weighing value: 20 mm
Suck back value: 4 mm
Screw diameter: diameter 18 mm
Screw rotational rate: 50 rpm
Holding pressure: 20 MPa
Cooling time: 10 seconds
Back pressure: 4 MPa
Maximum clamping force: 300 kN

Further, in order to obtain reference values, the injection molding machine described in the molding conditions 2 outlined below was used, and the pellets of Example 1 were used as a molding material to mold an ASTM No. 4 dumbbell test piece under the molding conditions 2 described below.
Subsequently, the test piece was ground using a GranCutter SPC-11400 manufactured by Harmo Co., Ltd. to obtain a ground product. In this example, this ground product represents the recycled material of the molding conditions 2.
Next, using the recycled material obtained above (50 parts by mass) and the pellets of Example 1 (50 parts by mass) as molding materials, an ASTM No. 4 dumbbell test piece was molded under the molding conditions 2 described below.
The plasticizing time during molding was measured for 300 consecutive shots, the average value (seconds)

was determined, and this average value was deemed the plasticizing time.

(Molding conditions 2)

Injection molding machine: PNX40-5A, manufactured by Nissei Plastic Industrial Co., Ltd.
Cylinder temperatures: nozzle 340°C, front section 340°C, middle section 330°C, rear section 310°C
Mold temperature: 130°C
Injection speed: 150 mm/second
Weighing value: 26 mm
Suck back value: 2 mm
Screw diameter: diameter 22 mm
Screw rotational rate: 200 rpm
Holding pressure: 28 MPa
Cooling time: 15 seconds
Back pressure: 2.2 MPa
Maximum clamping force: 405 kN

[Examples 2 and 3, Comparative Examples 1 to 8]

With the exception of altering the fatty acid metal salt from Example 1 as shown in Table 1, the same method as Example 1 was used to produce pellets and injection molded articles.

The fatty acid metal salts of Example 3 and Comparative Examples 4, 5, 7 and 8 were prepared by subjecting the commercially available fatty acid metal salt to a classification treatment using an electric vibration sieving machine (manufactured by Nitto Kagaku Co., Ltd.), and then conducting appropriate mixing to achieve the sieve residues shown in Table 1.

The sieves used had a nominal opening of 250 μm (wire diameter: 160 μm) prescribed in JIS Z 8801, a nominal opening of 180 μm (wire diameter: 125 μm), a nominal opening of 106 μm (wire diameter: 75 μm), and a nominal opening of 75 μm (wire diameter: 50 μm) respectively.

[Examples 1-2 to 1-4]

With the exception of replacing the fatty acid metal salt used in the above Example 1, and instead using a fatty acid metal salt prepared by subjecting a commercially available fatty acid metal salt (calcium laurate) to a classification treatment using an electric vibration sieving machine (manufactured by Nitto Kagaku Co., Ltd.), and then conducting appropriate mixing to achieve the sieve residues shown in Table 2, the same method as Example 1 was used to produce pellets and injection molded articles.

The sieves used had a nominal opening of 250 μm (wire diameter: 160 μm) prescribed in JIS Z 8801, a nominal opening of 180 μm (wire diameter: 125 μm), a nominal opening of 106 μm (wire diameter: 75 μm), and a nominal opening of 75 μm (wire diameter: 50 μm) respectively.

[Example 2-2]

In the above Example 2, with the exception of changing the amount added of the fatty acid metal salt (lithium laurate) as shown in Table 3, the same method as Example 2 was used to produce pellets and injection molded articles.

[Example 2-3]

In the above Example 2, with the exception of altering the production of the pellets in the manner described below (see Table 4), the same method as Example 2 was used to produce pellets and injection molded articles.

(Production of pellets)

The liquid crystal polyester produced above (55 parts by mass), a plate-like inorganic filler mica (YM-25S, manufactured by Yamaguchi Mica Co., Ltd.) (8 parts by mass), a plate-like inorganic filler talc (Rose K, manufactured by Nippon Talc Co., Ltd.) (25 parts by mass), and a fibrous inorganic filler milled glass fiber (EFH75-01, manufactured by Central Glass Fiber Co., Ltd.) (12 parts by mass) were melt kneaded using a twin-screw extruder (PCM-30, manufactured by Ikegai, Ltd.) under conditions including a cylinder temperature of 340°C and a screw rotational rate of 150 rpm, thus obtaining a melt kneaded product. Subsequently, the obtained melt kneaded product was discharged through a circular discharge port as a strand, and following cooling, the strand was pelletized (cut) to obtain pre-pellets of liquid crystal polyester.

Subsequently, a fatty acid metal salt (lithium laurate) was coated onto the surfaces of the obtained pre-pellets in the proportion shown in Table 4. The fatty acid metal salt was added in the form of a solid-state powder under an atmosphere at 25°C. Following addition of the fatty acid metal salt, a tumbler mixer (SKD-25, manufactured by PLAENG) was used to conduct mixing for 10 minutes at a rotational rate of 30 rotations/minute, thus obtaining pellets of Example 2-3.

The results of the above measurements are shown in Tables 1 to 4.

The plasticizing time was evaluated using the value obtained when an injection molding machine with a screw diameter of 18 mm was used. A plasticizing time of 6 seconds or shorter was deemed a favorable result.

[Table 1]

| | | | | | Example 1 | Example 2 | Example 3 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|---|---|---|---|
| Fatty acid metal salt | Name of compound | | | | Calcium laurate | Lithium laurate | Lithium stearate | | Calcium stearate | Barium stearate | Lithium behenate | | Calcium montanate | | Lithium montanate |
| | Amount added | | | | 0.02 | 0.02 | 0.02 | 0.02 | 0.02 | 0.02 | 0.02 | 0.02 | 0.02 | 0.02 | 0.02 |
| | Number of carbon atoms in fatty acid | | | | 12 | 12 | 18 | 18 | 18 | 18 | 22 | 22 | 28 | 28 | 28 |
| | Melting point | | - | °C | 155 | 230 | 220 | 220 | 155 | 225 | 217 | 217 | 135 | 135 | 205 |
| | Mass loss ratio | | 160°C, 48h | mass % | 8.3 | 0.4 | 0.4 | 0.4 | 4.8 | 3.3 | 1.2 | 1.2 | 8.5 | 8.5 | 4.9 |
| | Particle diameter (microscope observation) | | | µm | 6 | 60 | 10 | 11 | 8 | 7 | 35 | 31 | 15 | 14 | 18 |
| | Sieve residue | Nominal opening 250 µm | | mass % | 2 | 1 | 0 | 14 | 11 | 99 | 10 | 1 | 2 | 0 | 0 |
| | | Nominal opening 180 µm | | mass % | 2 | 2 | 0 | 68 | 64 | 100 | 30 | 5 | 9 | 0 | 1 |
| | | Nominal opening 106 µm | | mass % | 15 | 21 | 0 | 94 | 99 | 100 | 50 | 10 | 42 | 5 | 10 |
| | | Nominal opening 75 µm | | mass % | 40 | 61 | 0 | 95 | 100 | 100 | 80 | 50 | 72 | 10 | 20 |
| Plasticizing time | Screw diameter ø18 molding machine | | average | seconds | 5.2 | 4.6 | 5.6 | 6.4 | 8.1 | 6.5 | 10.2 | 9.1 | 8.2 | 9.0 | 12.9 |
| | | | standard deviation | seconds | 0.3 | 0.2 | 0.4 | 0.5 | 0.8 | 0.4 | 1.4 | 1.1 | 0.8 | 0.7 | 1.5 |
| (Reference value) | Screw diameter ø22 molding machine | | average | seconds | 6.2 | 3.4 | 3.4 | 3.3 | 3.9 | 3.9 | 4.1 | 3.9 | 4.7 | 4.4 | 3.5 |

[Table 2]

| | | | | Example 1 | Example 1-2 | Example 1-3 | Example 1-4 |
|---|---|---|---|---|---|---|---|
| Fatty acid metal salt | Name of compound | | | Calcium laurate | Calcium laurate | Calcium laurate | Calcium laurate |
| | Amount added | | | 0.02 | 0.02 | 0.02 | 0.02 |
| | Number of carbon atoms in fatty acid | | | 12 | 12 | 12 | 12 |
| | Melting point | - | °C | 155 | 155 | 155 | 155 |
| | Mass loss ratio | 160°C, 48h | mass % | 8.3 | 8.3 | 8.3 | 8.3 |
| | Particle diameter (microscope observation) | | µm | 6 | 6 | 6 | 6 |
| | Sieve residue | Nominal opening 250 µm | mass % | 2 | 0 | 0 | 5 |
| | | Nominal opening 180 µm | mass % | 2 | 5 | 10 | 15 |
| | | Nominal opening 106 µm | mass % | 15 | 30 | 50 | 70 |
| | | Nominal opening 75 µm | mass % | 40 | 60 | 80 | 100 |
| Plasticizing time | Screw diameter ø18 molding machine | average | seconds | 5.2 | 4.3 | 4.5 | 4.3 |
| | | standard deviation | seconds | 0.3 | 0.2 | 0.2 | 0.2 |

[Table 3]

<table>
<tr><td></td><td colspan="4"></td><td>Example 2</td><td>Example 2-2</td></tr>
<tr><td rowspan="9">Fatty acid metal salt</td><td colspan="4">Name of compound</td><td colspan="2">Lithium laurate</td></tr>
<tr><td colspan="4">Amount added</td><td>0.02</td><td>0.005</td></tr>
<tr><td colspan="4">Number of carbon atoms in fatty acid</td><td>12</td><td>12</td></tr>
<tr><td>Melting point</td><td colspan="2">-</td><td>°C</td><td>230</td><td>230</td></tr>
<tr><td>Mass loss ratio</td><td colspan="2">160°C, 48h</td><td>mass %</td><td>0.4</td><td>0.4</td></tr>
<tr><td colspan="3">Particle diameter (microscope observation)</td><td>μm</td><td>60</td><td>60</td></tr>
<tr><td rowspan="4">Sieve residue</td><td colspan="2">Nominal opening 250 μm</td><td>mass %</td><td>1</td><td>1</td></tr>
<tr><td colspan="2">Nominal opening 180 μm</td><td>mass %</td><td>2</td><td>2</td></tr>
<tr><td colspan="2">Nominal opening 106 μm</td><td>mass %</td><td>21</td><td>21</td></tr>
<tr><td colspan="2">Nominal opening 75 μm</td><td>mass %</td><td>61</td><td>61</td></tr>
<tr><td colspan="2" rowspan="2">Plasticizing time</td><td rowspan="2">Screw diameter ø18 molding machine</td><td>average</td><td>seconds</td><td>4.6</td><td>4.2</td></tr>
<tr><td>standard deviation</td><td>seconds</td><td>0.2</td><td>0.2</td></tr>
</table>

[Table 4]

| | | | | | | Example 2 | Example 2-3 |
|---|---|---|---|---|---|---|---|
| LCP blend amount | | | | | parts by mass | 64 | 55 |
| Mica blend amount | | | | | parts by mass | 36 | 8 |
| Talc blend amount | | | | | parts by mass | - | 25 |
| Milled glass blend amount | | | | | parts by mass | - | 12 |
| Weighing stabilizer | Name of compound | | | | | Lithium laurate | |
| | Amount added | | | | | 0.02 | 0.02 |
| | Number of carbon atoms in fatty acid | | | | | 12 | 12 |
| | Melting point | | - | | °C | 230 | 230 |
| | Mass loss ratio | | 160°C, 48h | | mass % | 0.4 | 0.4 |
| | Particle diameter (microscope observation) | | | | μm | 60 | 60 |
| | Sieve residue | Nominal opening 250 μm | | | mass % | 1 | 1 |
| | | Nominal opening 180 μm | | | mass % | 2 | 2 |
| | | Nominal opening 106 μm | | | mass % | 21 | 21 |
| | | Nominal opening 75 μm | | | mass % | 61 | 61 |
| Plasticizing time | Screw diameter ø18 molding machine | | | average | seconds | 4.6 | 5.2 |
| | | | | standard deviation | seconds | 0.2 | 0.2 |

As shown in Table 1, in Comparative Examples 4 to 8 which used a fatty acid metal salt in which the number of carbon atoms in the fatty acid exceeded 20, the plasticizing time tended to be longer, even when the sieve residue for a sieve with a nominal opening of 106 μm was 80% by mass or less.

Further, in Comparative Examples 1 to 3 which used a fatty acid metal salt for which the sieve residue for a sieve with a nominal opening of 106 μm exceeded 80% by mass, the plasticizing time tended to be longer, even when the number of carbon atoms in the fatty acid of the fatty acid metal salt was 20 or fewer.

In contrast, as shown in Table 1, in Examples 1 to 3 which used a fatty acid metal salt of which the number of carbon atoms in the fatty acid was 20 or less, and of which the sieve residue for a sieve with a nominal opening of 106 μm was 80% by mass or less, the plasticizing time was short and the variation in the plasticizing time was small, indicating superior shortening and stability of the plasticizing time.

In terms of the melting point, the mass loss ratio and the average particle size as determined by microscope observation for each of the fatty acid metal salts shown in Table 1, no correlation with the plasticizing time could be confirmed. These results also confirmed that the prescriptions described above for the number of carbon atoms in the fatty acid and the sieve residue are important factors in shortening and stabilizing the plasticizing time.

Similarly, as shown in Table 2, in Examples 1-2 to 1-4 in which the sieve residue of the fatty acid metal salt for a sieve with a nominal opening of 106 μm was varied within a range from 0 to 80% by mass, the plasticizing time was short and the variation in the plasticizing time was small, indicating superior shortening and stability of the plasticizing time.

Similarly, as shown in Table 3, in Example 2-2 in which the amount added of the fatty acid metal salt was altered, the plasticizing time was short and the variation in the plasticizing time was small, indicating superior shortening and stability of the plasticizing time.

As shown in Table 4, even in Example 2-3 in which the type and content of filler was altered, the plasticizing

time was short and the variation in the plasticizing time was small, indicating superior shortening and stability of the plasticizing time.

The above results manifested far more clearly when an injection molding machine with a screw diameter of 18 mm was used, rather than when an injection molding machine with a screw diameter of 22 mm was used (see Table 1).

Furthermore, for the pellets of each of the above embodiments, even when the pellets are mixed with a recycled material and used, favorable characteristics were still able to be obtained in terms of shortening and stability of the plasticizing time.

Each configuration in each embodiment, a combination thereof, and the like are examples, and addition, omission, substitution of a configuration, and other modifications are possible unless they depart from the object of the present invention. In addition, the present invention is not limited to each embodiment, but is limited only to the scope of the claims.

Description of Reference Signs

1: Pellet
11: Pellet body
12: Fatty acid metal salt

## Claims

1. A liquid crystal polyester composition comprising a liquid crystal polyester and a fatty acid metal salt, wherein

    the fatty acid metal salt comprises a fatty acid metal salt of which the number of carbon atoms is 20 or less, and a sieve residue of the fatty acid metal salt measured in accordance with JIS K 0069 for a sieve with a nominal opening of 106 μm prescribed in JIS Z 8801 is from 0 to 80% by mass relative to a total mass of the fatty acid metal salt.

2. The liquid crystal polyester composition according to Claim 1, wherein the fatty acid metal salt comprises a fatty acid metal salt of which the number of carbon atoms is 16 or less.

3. The liquid crystal polyester composition according to Claim 1 or 2, wherein a content of the fatty acid metal salt, relative to a total mass of the liquid crystal polyester composition, is from 0.001 to 5% by mass.

4. The liquid crystal polyester composition according to any one of Claims 1 to 3, wherein a sieve residue of the fatty acid metal salt measured in accordance with JIS K 0069 for a sieve with a nominal opening of 250 μm prescribed in JIS Z 8801 is from 0 to 30% by mass relative to a total mass of the fatty acid metal salt.

5. The liquid crystal polyester composition according to any one of Claims 1 to 4, wherein a sieve residue of the fatty acid metal salt measured in accordance with JIS K 0069 for a sieve with a nominal opening of 180 μm prescribed in JIS Z 8801 is from 0 to 50% by mass relative to a total mass of the fatty acid metal salt.

6. The liquid crystal polyester composition according to any one of Claims 1 to 5, wherein the fatty acid metal salt has a melting point from 130 to 300°C.

7. The liquid crystal polyester composition according to any one of Claims 1 to 6, wherein the metal of the fatty acid metal salt is calcium or lithium.

8. The liquid crystal polyester composition according to Claim 7, wherein the fatty acid metal salt is calcium laurate or lithium laurate.

9. The liquid crystal polyester composition according to any one of Claims 1 to 8, wherein the liquid crystal polyester has a structural unit (1) represented by following formula (1), a structural unit represented by following formula (2), and a structural unit represented by following formula (3):

    (1) -O-Ar1-CO-

(2) -CO-Ar2-CO-

(3) -X-Ar3-Y-

wherein in formulas (1) to (3), Ar1 represents a phenylene group, a naphthylene group, or a biphenylylene group, Ar2 and Ar3 each independently represent a phenylene group, a naphthylene group, a biphenylylene group, or a group represented by following formula (4), and X and Y each independently represent an oxygen atom or an imino group (-NH-),
one or more hydrogen atoms in any group represented by Ar1, Ar2 or Ar3 may each be independently substituted with a halogen atom, an alkyl group of 1 to 10 carbon atoms, or an aryl group of 6 to 20 carbon atoms,

(4) -Ar4-Z-Ar5-

wherein in formula (4), Ar4 and Ar5 each independently represent a phenylene group or a naphthylene group, and Z represents an oxygen atom, a sulfur atom, a carbonyl group, a sulfonyl group, or an alkylidene group of 1 to 10 carbon atoms, and
one or more hydrogen atoms in either group represented by Ar4 or Ar5 may each be independently substituted with a halogen atom, an alkyl group of 1 to 10 carbon atoms, or an aryl group of 6 to 20 carbon atoms.

**10.** The liquid crystal polyester composition according to any one of Claims 1 to 9, further comprising an inorganic filler.

**11.** The liquid crystal polyester composition according to Claim 10, wherein the inorganic filler is at least one selected from the group consisting of a glass fiber, talc and mica.

**12.** The liquid crystal polyester composition according to Claim 10 or 11, wherein a content of the inorganic filler, relative to a total mass of the liquid crystal polyester composition, is from 0.3 to 65% by mass.

**13.** The liquid crystal polyester composition according to any one of Claims 1 to 12, wherein the fatty acid metal salt is a powder that satisfies a requirement that a sieve residue of the fatty acid metal salt measured in accordance with JIS K 0069 for a sieve with a nominal opening of 106 μm prescribed in JIS Z 8801 is from 0 to 80% by mass relative to a total mass of the fatty acid metal salt.

**14.** The liquid crystal polyester composition according to any one of Claims 1 to 13, wherein

the composition comprises pellets comprising the liquid crystal polyester, and
at least a part of the fatty acid metal salt is attached to surfaces of the pellets.

**15.** The liquid crystal polyester composition according to any one of Claims 1 to 14, wherein the composition is used as a molding material for an injection molding machine having a maximum clamping force of 400 kN or less.

**16.** The liquid crystal polyester composition according to any one of Claims 1 to 15, wherein the composition is used as a molding material for an injection molding machine having a screw diameter of 20 mm or less.

**17.** A method for producing the liquid crystal polyester composition according to any one of Claims 1 to 16,

the method comprising a mixing step of mixing a liquid crystal polyester and a fatty acid metal salt, wherein the fatty acid metal salt comprises a fatty acid metal salt of which the number of carbon atoms is 20 or less, and a sieve residue of the fatty acid metal salt measured in accordance with JIS K 0069 for a sieve with a nominal opening of 106 μm prescribed in JIS Z 8801 is from 0 to 80% by mass relative to a total mass of the fatty acid metal salt.

**18.** The method for producing a liquid crystal polyester composition according to Claim 17, wherein the mixing step comprises attaching the fatty acid metal salt to surfaces of pellets containing the liquid crystal polyester.

**19.** A method for producing an injection molded article, the method comprising a step of injection molding the liquid crystal polyester composition according to any one of Claims 1 to 16 to obtain the injection molded article.

**20.** The method for producing an injection molded article according to Claim 19, wherein the liquid crystal polyester

composition is injection molded in an injection molding machine having a maximum clamping force of 400 kN or less.

**21.** The method for producing an injection molded article according to Claim 19 or 20, wherein the liquid crystal polyester composition is injection molded in an injection molding machine having a screw diameter of 20 mm or less.

**22.** The method for producing an injection molded article according to any one of Claims 19 to 21, wherein the liquid crystal polyester composition comprises a recycled material of a liquid crystal polyester.

FIG. 1

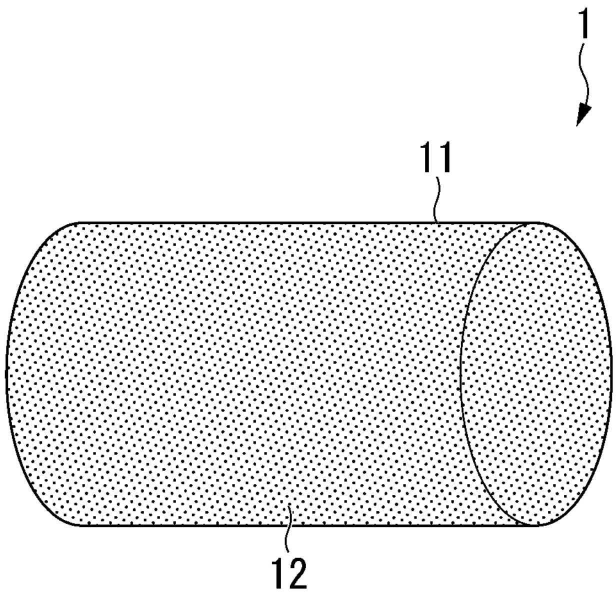


FIG. 2

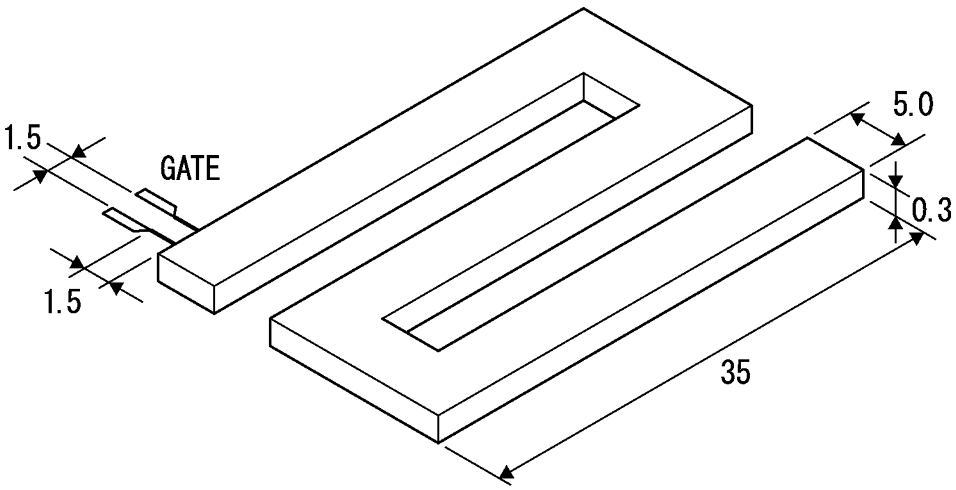

## INTERNATIONAL SEARCH REPORT

International application No.
**PCT/JP2022/000371**

**A. CLASSIFICATION OF SUBJECT MATTER**

***B29C 45/00***(2006.01)i; ***B29C 45/64***(2006.01)i; ***C08K 5/098***(2006.01)i; ***C08L 67/03***(2006.01)i; ***C08K 3/013***(2018.01)i
FI: C08L67/03; B29C45/00; B29C45/64; C08K5/098; C08K3/013

According to International Patent Classification (IPC) or to both national classification and IPC

**B. FIELDS SEARCHED**

Minimum documentation searched (classification system followed by classification symbols)

B29C45/00; B29C45/64; C08K5/098; C08L67/03; C08K3/013

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-070728 A (SUMITOMO CHEMICAL CO., LTD.) 10 May 2018 (2018-05-10) claims 1, 5, 7-10, paragraphs [0001]-[0008], [0042]-[0066], [0078]-[0085], [0101]-[0128] | 1-22 |
| Y | JP 2018-021137 A (SUMITOMO CHEMICAL CO., LTD.) 08 February 2018 (2018-02-08) claims 1, 4, 7-9, paragraphs [0052], [0054] | 1-22 |
| A | JP 2020-164593 A (UENO FINE CHEMICALS INDUSTRY, LTD.) 08 October 2020 (2020-10-08) claim 1 | 1-22 |
| A | JP 2015-199775 A (MITSUBISHI ENGINEERING PLASTICS CORP.) 12 November 2015 (2015-11-12) claim 1 | 1-22 |
| A | JP 2020-125398 A (UENO FINE CHEMICALS INDUSTRY, LTD.) 20 August 2020 (2020-08-20) claim 1 | 1-22 |
| A | JP 2015-063641 A (TORAY INDUSTRIES, LTD.) 09 April 2015 (2015-04-09) claim 1 | 1-22 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 March 2022** | **29 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

INTERNATIONAL SEARCH REPORT

International application No.
**PCT/JP2022/000371**

**C. DOCUMENTS CONSIDERED TO BE RELEVANT**

| Category* | Citation of document, with indication, where appropriate, of the relevant passages | Relevant to claim No. |
| --- | --- | --- |
| A | JP 05-125258 A (NIPPON PETRO CHEMICALS CO., LTD.) 21 May 1993 (1993-05-21) claim 1, paragraph [0001] | 1-22 |

Form PCT/ISA/210 (second sheet) (January 2015)

**INTERNATIONAL SEARCH REPORT**
**Information on patent family members**

International application No.
**PCT/JP2022/000371**

| Patent document cited in search report | Publication date (day/month/year) | Patent family member(s) | Publication date (day/month/year) |
|---|---|---|---|
| JP 2018-070728 A | 10 May 2018 | US 2020/0048553 A1<br>claims 1, 5, 7-10, paragraphs [0001]-[0011], [0102]-[0138], [0161]-[0174], [0197]-[0297]<br>CN 109863202 A<br>KR 10-2019-0076968 A | |
| JP 2018-021137 A | 08 February 2018 | US 2019/0191923 A1<br>claims 1, 4, 7-9, paragraphs [0119]-[0121], [0125]-[0129]<br>EP 3494846 A1<br>CN 109561792 A<br>KR 10-2019-0039701 A | |
| JP 2020-164593 A | 08 October 2020 | (Family: none) | |
| JP 2015-199775 A | 12 November 2015 | (Family: none) | |
| JP 2020-125398 A | 20 August 2020 | (Family: none) | |
| JP 2015-063641 A | 09 April 2015 | (Family: none) | |
| JP 05-125258 A | 21 May 1993 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021004179 A
- JP 2013177007 A
- JP 2000019168 A


### Non-patent literature cited in the description


- Liquid Crystal Polymers - Synthesis, Molding, Applications. CMC Publishing Co., Ltd, 05 June 1987, 95-105